(19) Europäisches Patentamt
European Patent Office
Office européen des brevets

(11) **EP 3 990 264 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **20735529.8**

(22) Anmeldetag: **25.06.2020**

(51) Internationale Patentklassifikation (IPC):
**B29C 70/50** *(2006.01)*   **B29C 70/22** *(2006.01)*
**B29B 11/16** *(2006.01)*   **B29C 53/04** *(2006.01)*
**B29D 99/00** *(2010.01)*   **B29C 70/52** *(2006.01)*

(52) Gemeinsame Patentklassifikation (CPC):
**B29C 70/504; B29B 11/16; B29C 53/043; B29C 70/222; B29D 99/0003;** B29C 55/08; B29C 70/52

(86) Internationale Anmeldenummer:
**PCT/EP2020/067947**

(87) Internationale Veröffentlichungsnummer:
**WO 2020/260534 (30.12.2020 Gazette 2020/53)**

(54) **UMFORMVORRICHTUNG ZUR KONTINUIERLICHEN UMFORMUNG**

SHAPING DEVICE FOR CONTINUOUS SHAPING

DISPOSITIF DE FAÇONNAGE POUR LE FAÇONNAGE CONTINUEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2019   DE 202019103567 U**

(43) Veröffentlichungstag der Anmeldung:
**04.05.2022   Patentblatt 2022/18**

(73) Patentinhaber: **Carbon Truck & Trailer GmbH 21614 Buxtehude (DE)**

(72) Erfinder:
• SCHULTE, Benedikt
  22765 Hamburg (DE)
• KALKOFFEN, Gerret
  22085 Hamburg (DE)

(74) Vertreter: **Raffay & Fleck Patentanwälte Stephansplatz 2-6 20354 Hamburg (DE)**

(56) Entgegenhaltungen:
**EP-A1- 2 985 137     US-A1- 2018 009 155**

**Beschreibung**

Die Erfindung betrifft eine Umformvorrichtung und ein System zur kontinuierlichen Umformung eines Faserhalbzeugs sowie ein Verfahren zum Umformen eines Faserhalbzeugs.

Unterschiedliche Gegenstände bestehen heutzutage aus Faserhalbzeug wie zum Beispiel aus Carbonfasern. Das Faserhalbzeug wird hierzu beispielsweise einer Rolle entnommen und in einem System mit einer Umformvorrichtung in die gewünschte Form geformt und daraufhin versteift bzw. gefestigt. Es ist bekannt, dass das Faserhalbzeug von einer Entnahmestelle, welche das Faserhalbzeug für den weiteren Prozess bereitstellt, abzurollen und in die weiteren, für den Prozess vorgesehenen, Vorrichtungen entlang einer oder - wenn die Bearbeitung nicht geradlinig erfolgt - mehreren Richtungen, also Schubrichtung(en), zu schieben.

Es ist weiterhin bekannt, Teile bzw. bestimmte Abschnitte des geschobenen oder gezogenen Faserhalbzeugs in der Umformvorrichtung umzuklappen. Dabei gibt es sowohl Systeme, die ein kontinuierliches Bearbeiten (häufig auch "endloses Bearbeiten" genannt) des Materials erlauben, andere Systeme wiederum lediglich eine stückweise Bearbeitung (manchmal auch als "quasi-endlose" Bearbeitung bezeichnet) des Materials erlauben, da zum Umformen das Material beispielsweise abgeschnitten werden muss. Unterschiede bestehen des Weitern in Bezug auf das zugeführte Material, das in der Regel von einer Rolle mit begrenzter Materialmenge bereitgestellt wird, dann aber meist entweder in kleineren Abschnitten der eigentliche Umformung zugeführt oder vor der eigentlichen Umformung mit nachfolgendem Material zu einem quasi-endlosen Materialstrom verbunden wird, beispielsweise durch Vernähen oder Verkleben.

Dabei ist neben einem kontinuierlichen Bearbeiten eines endlosen oder quasi-endlosen Materials auch die Bearbeitung von getrennten Materialabschnitten bekannt. Dies bietet mehr Freiheiten in der Formgebung bedingt aber auch höheren Aufwand.

Im Folgenden wird unter endlosem Material insbesondere ein Material verstanden, das eine Länge aufweist, welche länger ist als die Länge der, insbesondere effektiven, Umformstrecke der Umformvorrichtung, insbesondere eine Länge von mehr als 50 m, insbesondere mehr als 70 m aufweist, dabei kann diese Länge auch durch mehrere miteinander verbundene Materialabschnitte erzeugt sein.

Durch derartige Verfahren werden dann Faserformhalbzeuge erzeugt, die eine definierte Form aufweisen. Dieses Faserformhalbzeug kann dann verfestigt und somit formstabil werden, insbesondere durch Aushärten eines Bindemittels. Faserformhalbzeuge oder formstabilisierte Faserformhalbzeuge können je nach Verfahren wiederum als Stücke, insbesondere mit einer Länge von weniger als 50m oder endlos erzeugt werden. Formstabilisierte Faserformhalbzeuge werden dann in der Regel weiter bearbeitet, um beispielsweise mittels Anfügen fertige Endprodukte, wie beispielsweise Fahrgestelle herzustellen.

Durch die bekannten Vorrichtungen lassen sich die Faserhalbzeuge in Abhängigkeit der verwendeten Vorrichtung in Faserformhalbzeuge mit unterschiedlichen Profilen formen, beispielsweise in ein L-, U-, Z-, O-, rechteck, Hut- oder O(Omega)-Profil. Ein solches Profil ist dadurch gekennzeichnet, dass in einem Schnitt durch das Material entlang einer Ebene, welche sich entlang der Breite des Materials erstreckt, eine Schnittlinie zumindest teilweise der entsprechenden Form des Buchstabens ähnelt. Dabei kommt es nicht darauf an, dass ein solches Profil die gleichen Proportionen oder scharfe Eckpunkt bzw. Knickpunkte aufweist - wie das gewünschte Profil, sondern dass die grundlegende Form des Buchstabens durch ein solches Profil wiedergespiegelt wird. So weisen zu einem Omega-Profil geformte Materialien häufig zwei kurze Schenkel und dazwischen einen Abschnitt auf, welcher sich weg von den beiden Schenkeln erstreckt, und insbesondere gekrümmt ist bzw. eine beide Schenkel verbindende Kurve ausbildet.

Aus den vorgenannten Techniken und Vorrichtungen ist bekannt, dass während des Umformens das Material durch das Umformen knittern und Falten bilden kann. Um das Problem des Knitterns bzw. der Faltenbildung beim Umformen des geschobenen oder gezogenen Materials bei den vorgenannten Techniken zu verringern, wurde weiterhin vorgeschlagen Rollen in den Umformbereichen anzuordnen, die in Schubrichtung unterstützend schieben, um so das Material gleichmäßiger und zusätzlich durch die Umformstrecke zu schieben. Alternativ oder zusätzlich wird vorgeschlagen, nach dem Umklappen die umgeklappten Abschnitte durch Pressen zu glätten und durch Heizen und Pressen formstabile Materialien zu erzeugen. Solche Techniken und Vorrichtungen sind unter anderem bekannt aus der US 2012/0328846 A1, aus welcher eine stückweise Bearbeitung von Fasermaterial und ein Anpressen der zu formenden Abschnitte bekannt ist , EP 2 265 436 B1, aus welcher ein quasikontinuierlicher/stückweiser Prozess von einer Materialabschnitten bekannt ist, oder EP 2 722 145 A1, aus welcher ein kontinuierlicher Prozess und einem mittels Rollen Auseinanderziehens des Fasermaterials bekannt ist.

Aus der EP 2 985 137 A1 ist eine solche Vorrichtung mit über den Rollen angeordneten Förderbändern bekannt.

Auch sind Pultrusionsverfahren bekannt, welche eine kontinuierliche Herstellung von gegebenenfalls faserverstärkten Kunststoffprofilen ermöglichen. Aus einem Faserregal wird durch eine Faserführung das Fasermaterial in einer Imprägniervorrichtung bzw. Tränkvorrichtung mit Bindemittel versehen und gegebenenfalls durch Hinzufügung und Integration weiterer Materialien verstärkt. Das Fasermaterial wird weiterhin dann in einer Formgebungsvorrichtung geformt und mittels einer Härtevorrichtung gehärtet. Dabei wird das Fasermaterial durch eine der Härtung nachgelagerte Vorrichtung gezogen.

Auch ist es bekannt, mit hintereinander angeordneten Blenden oder Spalte, durch die das Material geführt und stückweise umgeformt wird, zu arbeiten, um das Material der Pultrusionsvorrichtung oder der Härtevorrichtung zuzuführen.

Aus der DE 10 2014 011 943 A1 ist es bekannt, zwei Formteile abwechselnd über den Strang zu führen. Die Formteile können dabei Einlaufschrägen aufweisen, zweigen aber keine den Strang kontinuierlich umformende in Stranglängsrichtung verlaufende Schrägen. Die Einlaufabschnitte sind lediglich vorgesehen, um den Materialeinlauf zu erleichtern.

Die DE 10 2014 019 220 A1 lehrt das Formen eines glatten Strangs mittels unterschiedlich geformter Rollen.

Die US 2005/0 269 016 A1 offenbart das Umformen mittels einer Vielzahl hintereinander angeordneter Rollenpaare mit unterschiedlichen Spalten zwischen den Rollen jeweils eines Paars.

Auch die 2011/0135886 A1 lehrt das Umformen mittels Spalten zwischen den Rollen eines Paars von Rollen.

Die JP 59 179 228 A offenbart das kontinuierliche Formen von über die Länge veränderlicher Querschnittsformen mittels eines Parrs azentrisch gelagerter Rollen und des dazwischen ausgebildeten sich während der Drehung der Rollen zyklisch in der Form ändernden Spalts.

Ein Problem in den vorbekannten Systemen und insbesondere vorbenannten Techniken besteht unter anderem darin, dass das Faserhalbzeug nicht in einem endlosen Prozess geformt wird, sondern lediglich stückweise Faserformhalbzeuge erstellt werden, und/oder es zu Faltenbildung oder Wellungen im Faserformhalbzeug kommt. Die Wellungen, Ondulation oder Nichtparallellage von Faserhalbzeugen in Faserformhalbzeuge führt zu Inhomogenitäten und unerwünschten und schwer planbaren Schwächungen des Werkstücks.

Aufgabe der vorliegenden Erfindung ist es demnach, zumindest einzelne der vorgenannten Probleme bei der Herstellung von endlosen Faserformhalbzeuge zu lösen.

Die vorliegende Erfindung betrifft somit eine Umformvorrichtung nach Anspruch 1. Vorteilhafte Weiterbildungen einer Vorrichtung bzw. eines Systems sind dabei durch die abhängigen Ansprüche gegeben. Ferner wird in der nachfolgenden Beschreibung auch ein nicht beanspruchtes Verfahren zur kontinuierlichen Umformung, also insbesondere der Herstellung von endlosen Faserformhalbzeug und ein nicht beanspruchtes entsprechendes Werkstück offenbart.

Unter Faserhalbzeug ist insbesondere ein Material zu verstehen, welches aus mehreren Fasern, beispielsweise Naturfasern, Glasfasern, Chemiefasern, wie Kunststoff oder Carbonfaser, besteht, wobei die Fasern zusammen ein Material definieren, welches sowohl eine Breiten- als auch eine Längenausdehnung aufweist. Insbesondere ist ein solches Material mehrere Meter lang und/oder einige Dezimeter breit und/oder mit einer Dicke von unter zehn Zentimeter. Es handelt sich bei Faserhalbzeug in der Regel um Rovings und/oder Gelege, Gewebe, Gewirke und/oder Gestricke, wobei die einzelnen Fasern meist vernäht oder gewebt sind. Bevorzugt werden Faserhalbzeuge und/oder Faserlagen aus nicht ondulierten Fasern, verwendet, wobei die Fasern insbesondere miteinander vernäht sind. Insbesondere werden Rovings und/oder Gelege, verwendet bzw. vom Werkstück beinhaltet. Das Werkstück kann ein Faserhalbzeug oder mehrere, insbesondere übereinander angeordnete, Faserhalbzeuge aufweisen. Ein Faserhalbzeug kann eine Faserlage, insbesondere zwei, aber auch mehrere übereinander angeordnete und miteinander verbundene, insbesondere vernähte, Faserlagen aufweisen. Insbesondere sind auch die Fasern einer Faserlage miteinander verbunden, insbesondere vernäht. Im Verfahren, der Vorrichtung und/oder System werden insbesondere mindestens zwei Faserhalbzeuge aufeinander angeordnet gemeinsam, insbesondere durch die Umformvorrichtung, geführt. Die Vorrichtung, die Umformvorrichtung und/oder das System sind insbesondere entsprechend zur gemeinsamen Führung eingerichtet. Weiterhin kann es sich bei dem Faserhalbzeug sowohl um solches aus Trockenfasermaterial, wie beispielsweise einem mono- oder multiaxialen Gelege aus Glas- und/oder Kohlenstoff (Carbon-)fasern, Glasvlies, recyceltem Kohlevlies, duroplastischen und/oder thermoplastischem Kunststoff, als auch um Prepregmaterial (preimpregnated fibres material/vorimprägnierte Fasern-Material) also Trockenfasermaterial, das mit einem Kunststoff behandelt, getränkt und/oder beschichtet ist, handeln.

Unter einer Umformvorrichtung zum kontinuierlichen Umformen ist insbesondere eine Vorrichtung zu verstehen, bei welcher eine Unterbrechung des Umformprozesses oder des umzuformenden Faserhalbzeugs, insbesondere ein Zuschneiden und/oder Abscheiden, insbesondere des Faserhalbzeugs, für die und/oder während der Umformung nicht nötig ist. Somit unterscheidet sich die vorliegende Vorrichtung und auch das vorliegende Verfahren grundlegend von den Vorrichtungen und Verfahren, welche lediglich dazu geeignet sind, eine Umformung durch eine Unterbrechung des Führens des Faserhalbzeugs und/oder durch ein Abschneiden dessen zu bewerkstelligen. Im Vergleich zu diesen, teilweise auch quasi-endlos genannten, Umformvorrichtung aus dem Stand der Technik wird bei der erfindungsgemäßen Umformvorrichtung bzw. bei dem erfindungsgemäßen Verfahren kein Stopp benötigt bzw. muss das Material auch nicht in bestimmten Abschnitten gestoppt bzw. zugeschnitten werden um daraufhin bearbeitet bzw. geformt zu werden. Im Vergleich zu den Umformvorrichtungen und Verfahren aus dem Stand der Technik, welche höchstens eine quasi-unendliche Umformung umfassen, ergibt sich somit der Vorteil, dass der Umformprozess aber auch nachgelagerte oder vorgelagerte angeschlossene Vorrichtungen und deren Prozesse nicht unterbrochen werde müssen, wodurch eine reproduzierbare Umformung des Faserhalbzeugs und eine ökonomischer Verfahrensführung ermöglicht wird. Etwaige Ungenauigkeiten beispielsweise erzeugt durch einen nicht immer gleichmäßigen Stopp oder ein nicht immer in gleichen Abschnitten stattfindenden Zuschnitt und somit ungleichmäßige geformte Faserhalbzeuge werden somit mittels der erfindungsgemäßen Umformvorrichtung bzw. des Verfahrens umgangen.

Auch gegenüber bekannten kontinuierlichen Verfahren, beispielsweise der Umformung mittels aufeinander folgende Spalte in Blenden oder zwischen zwei Rollen eines Rollenpaars bietet die Erfindung deutliche Vorteile.

Dabei haben die Erfinder insbesondere erkannt, dass das umzuformende Material, das Faserhalbzeug, von einer ersten Seite flächig unterstützt und auf einer anderen, der ersten Seite gegenüberliegenden, Seite des Faserhalbzeugs zumindest lokal in seiner Bewegungsfreiheit weiter eingeschränkt, beispielsweise angedrückt und/oder geführt, werden soll. Die weitere Einschränkung erfolgt dabei bezogen auf die Führungsfläche an mindestens einem konstanten Ort und/oder Bereich, an dem das Faserhalbzeug vorbeigeführt wird, insbesondere mittels eines relativ zur Führungsfläche ortsfesten Spalts, durch den das Faserhalbzeug geführt wird. Hierfür haben die Erfinder insbesondere vorgesehen, zur Stützung Formwerkzeuge und dadurch definierte Führungsflächen sowie zur weiteren Einschränkung Niederhalter und deren Kontaktoberfläche zu verwenden. Die weitere Einschränkung erfolgt dabei insbesondere quer zu einer ersten Richtung, einer Vorschubrichtung des Faserhalbzeugs durch die Umformvorrichtung. Im Vergleich zum Stand der Technik, so haben die Erfinder erkannt, bewirkt die zumindest lokale weitere Einschränkung und die flächige Führung zusammen eine Vielzahl von Vorteilen, insbesondere eine Reduzierung und insbesondere Unterbindung von Ondulation- und Faltenbildung.

Dies gilt insbesondere bei der Verwendung von Fasern, insbesondere Carbonfasern, die durch die Umformung in Längserstreckung verändert, insbesondere gebogen werden.

Erfindungsgemäß weist eine Umformvorrichtung mindestens einen, insbesondere mindestens zwei, Niederhalter und mindestens ein Formwerkzeug auf.

Der mindestens eine Niederhalter weist dabei eine Kontaktoberfläche auf. Diese Kontaktoberfläche ist insbesondere dazu eingerichtet mit dem mittels der Umformvorrichtung zu bearbeitenden, insbesondere umzuformenden, Faserhalbzeug in Kontakt gebracht zu werden und wird insbesondere mit diesem in Kontakt gebracht. Insbesondere weist der Niederhalter eine Oberfläche auf, wobei zumindest ein Teil dieser Oberfläche die Kontaktoberfläche darstellt. Insbesondere ist es vorstellbar, dass der Niederhalter drehbar, insbesondere um dessen Längsachse, insbesondere Mittelachse, gelagert ist, wobei beispielsweise bei einer solchen vorteilhaften Ausgestaltung des Niederhalters unterschiedliche Teile der Kontaktoberfläche zu unterschiedlichen Zeitpunkten in Kontakt mit dem Faserhalbzeug gelangen. Insbesondere weist jeder Niederhalter jeweils mindestens eine, insbesondere genau eine Kontaktoberfläche auf.

Der Niederhalter kann aber auch als flächiges Element, beispielsweise ähnlich zum Formwerkzeug ausgebildet werden, so dass in jedem Querschnitt über eine gewisse Länge des Formwerkzeugs, von zumindest 10 cm ein Spalt zwischen Formwerkzeug und Niederhalter ausgebildet wird, der seine Form von einem Querschnitt zum nächsten und/oder über die gewisse Länge kontinuierlich verändert. Beispielsweise kann der Niederhalter eine Niederhalterführungsfläche aufweisen, die zu der Führungsfläche des Formwerkzeuges parallel verläuft. So kann der Spalt in zwei Raumrichtungen deutlich größer ausgeführt werden als in die dritte Raumrichtung, insbesondere um mindestens das 5-Fache, insbesondere gemessen in der gedachten Verbiegung der Flächen zu Ebenen. Insbesondere handelt es sich bei den in dieser Variante den Spalt ausbildenden Flächen nicht um ebene Flächen, sondern um gekrümmte Flächen, insbesondere im Raum geschraubte und/oder verdrehte Flächen, die insbesondere einen konstanten Abstand aufweisen. Die Parallelität der Flächen ist dabei insbesondere lokal zu sehen und insbesondere dann oder in dem Bereich als gegeben anzusehen, wenn/in dem die Flächen einen konstanten Abstand voneinander aufweisen.

Mit Vorteil ist der Spalt so ausgebildet, dass in Richtung des Zuges des Faserhalbzeuges oder in die erste Richtung eine Länge von mindestens 10 cm aufweist und seine Form über diese Länge kontinuierlich verändert, insbesondere seine Querschnittsfläche und/oder seine Spalthöhe aber nicht verändert. Man könnte diesen Spalt auch als kontinuierliche Umsetzung der nicht kontinuierlichen Situation verstehen, bei der an sich aus dem Stand der Technik bekannte hintereinander aber mit Abstand angeordnete Spaltblenden, unmittelbar aufeinanderfolgend und sich ohne Abstand berührend mit nur sehr geringen Änderungen der Spaltform zwischen zwei aufeinanderfolgenden Blenden angeordnet sind.

Das mindestens eine Formwerkzeug definiert erfindungsgemäß mindestens eine Führungsfläche, bildet diese insbesondere aus und/oder weist diese insbesondere auf. Bei dem Formwerkzeug handelt es sich vorteilhafterweise um, insbesondere flächige, Bauteile, die insbesondere eine Führungsfläche aufweisen und/oder Gestänge, Teilflächen und/oder Stützstellen, die eine gemeinsame Führungsfläche definieren. Insbesondere definieren und/oder bilden Kanten, Enden und/oder Außenflächen des mindestens einen Formwerkzeugs die mindestens eine Führungsfläche. Dabei weist das Formwerkzeug ein Einlaufende und ein dem Einlaufende gegenüberliegendes Auslaufende auf. Beim Umformen eines Faserhalbzeugs wird dabei das Faserhalbzeug in dem Einlaufende eingeführt, über die Führungsfläche geführt, und dabei unter zumindest zeitweises Zusammenwirken mit dem mindestens einen Niederhalter umgeformt, und im Auslaufende ausgeführt, insbesondere den gegebenenfalls nachgeschalten Vorrichtungen übergeben.

Zwecks Definition einiger Orientierungen wird im Nachfolgenden wiederholt eine erste Richtung verwendet. Diese orientiert sich an der Richtung des Vorschubs oder der Richtung der Bewegung des Faserhalbzeuges durch die Umformvorrichtung, insbesondere über das Formwerkzeug, insbesondere die Führungsfläche. Vorteilhafterweise ist die erste Richtung die Bewegungs- oder Schubrichtungen, insbesondere der Vorschubrichtungen des Faserhalbzeugs oder eine Komponente (insbesondere durch Vektorzerlegung im horizontalen und vertikalen kartesischen Koordinatensystem entlang der Achsen) der Bewegungs- oder Schubrichtungen, insbesondere der Vorschubrichtungen des Faserhalbzeugs. Vorteilhafterweise liegt die erste Richtung, insbesondere die Vorschubrichtung, zumindest an der ersten und/oder zweiten und/oder dritten Ebene und/oder am Einlaufende, parallel zu einer ersten Umformebene und/oder entspricht die erste Richtung, insbesondere der Vorschubrichtung, zumindest an der ersten und/oder zweiten und/oder dritten Ebene und/oder am Einlaufende, einer ersten Umformebene, insbesondere zumindest einem der die erste Umformebene aufspannenden Vektor und dessen Richtung Insbesondere ist in der ersten Umformebene der Einlaufabschnitt und/oder der Auslaufabschnitt und/oder das Einlaufende und/oder das Auslaufende angeordnet, insbesondere sodass das Faserhalbzeug in der Ebene geführt wird, insbesondere über zumindest eine Linie in der Ebene und/oder einen Flächenabschnitt der Ebene, wobei sich Linie bzw. Flächenabschnitt insbesondere über die Breite des Faserhalbzeuges erstrecken. Vorteilhafterweise entspricht die erste Richtung den gemittelten Vorschubrichtungen eines durch den Umformabschnitt bewegenden Faserhalbzeugs. Dabei ist zu beachten, dass sich die Vorschubrichtung des Faserhalbzeuges zwischen unterschiedlichen Stellen des Umformwerkzeuges unterscheidet, insbesondere sowohl über die Breite des Faserhalbzeuges als auch über die Passage durch die Umformvorrichtung.

Der mindestens eine Niederhalter erstreckt sich erfindungsgemäß zumindest über einen sich entlang mindestens der ersten Richtung erstreckenden Umformabschnitt des mindestens einen Formwerkzeuges und/oder der durch das mindestens eine Formwerkzeug definierten Führungsfläche. Ein Umformabschnitt wird insbesondere somit durch die Erstreckung, insbesondere Längserstreckung, mindestens eines Niederhalters und mindestens eines Formwerkzeuges und/oder einer Führungsfläche definiert und/oder erstreckt sich, insbesondere über dessen Längserstreckung, entlang der ersten Richtung.

Der Umformabschnitt erstreckt sich weiterhin erfindungsgemäß von einer ersten Ebene aus in Richtung zum Auslaufende hin. Die erste Ebene ist insbesondere quer, insbesondere senkrecht, zur ersten Richtung und/oder zu einer Längserstreckung mindestens eines Niederhalters und/oder mindestens eines Formwerkzeuges. Die erste Ebene ist dabei die Ebene die zum Einlaufende nächstliegende, in welcher die mindestens eine Führungsfläche in der ersten Ebene mindestens einen ersten konkaven Schnittlinienabschnitt aufweist. Bei der Beurteilung eines konkaven Schnittlinienabschnitt, in Abgrenzung zu einem konvexen, wird das Formwerkzeug ausgehend von der Führungsfläche betrachtet. Die Wölbung, die den konkaven Schnittlinienabschnitt aufweist, zeigt bzw. ragt somit von der Führungsfläche in den Gegenstand, hier das Formwerkzeug hinein, im Vergleich zu einem Gegenstand ohne eine solche Wölbung. Dies wird besonders deutlich, wenn man sich das Formwerkzeug ggf. dicker, beispielsweise mit einer Wandstärke von mehreren Zentimetern oder Metern vorstellt, als dies eigentlich der Fall ist und sich diese zusätzliche gedachte Wandstärke von der Führungsfläche weg erstreckt.

Betrachtet man beispielsweise eine gerade Linie von zwei Punkten, die beidseits außerhalb des fraglichen Schnittlinienabschnitts auf der Schnittlinie und auf der Führungsfläche liegen, so schneidet diese Linie die Führungsfläche nicht und weist zumindest teilweise einen Abstand zur Führungsfläche und/oder Schnittlinie auf, wobei zwischen den beiden Punkten insbesondere das Formwerkzeug auf der gleichen Seite der Linie liegt, wie die Führungsfläche. Unter einem konkaven Schnittlinienabschnitt ist dabei insbesondere sowohl eine Wölbung im Sinne einer Kurve als auch eine Wölbung die durch zumindest einen Knick bzw. einer Unstetigkeit in der Kurve gekennzeichnet ist, anzusehen.

Die erste Ebene stellt insbesondere eine, insbesondere gedachte, Ebene dar, welche insbesondere durch die Umformvorrichtung, insbesondere den Umformabschnitt läuft bzw. diese schneidet und/oder welche sich quer zur Längserstreckung der Umformvorrichtung, insbesondere des Umformabschnitts, und/oder des Niederhalters und/oder des Formwerkzeugs und/oder welche sich quer, insbesondere senkrecht, zur ersten Richtung erstreckt. Unter einem Schnittlinienabschnitt ist dabei insbesondere ein Abschnitt bzw. ein Teil einer Linie eines Schnittes entlang der ersten Ebene durch die Führungsfläche und/oder das Formwerkzeug und/oder den Umformabschnitt zu verstehen, beispielsweise ähnlich eines Schnittes einer Ebene mit einer Kugel, der, zumindest sofern der Mittelpunkt des Kreises in der Ebene liegt, einen Kreis als Schnittlinie aufweist. Würde - was aus praktischen Gründen nicht funktioniert, also rein hypothetisch - die Kugeloberfläche oder ein Teil davon die Führungsfläche darstellen, wären alle Schnittlinienabschnitte konvex. Würde man eine Kugelhülle betrachten und deren innere Fläche oder ein Teil davon als Führungsfläche - ebenfalls rein hypothetisch - ansehen, wären alle Schnittlinienabschnitte konkav. Insbesondere beginnt der Umformabschnitt in der ersten Ebene, in welcher im Verlauf der Umformvorrichtung ausgehend vom Einlaufende die Führungsfläche zuerst bzw. zum ersten Mal einen konkaver Schnittlinienabschnitt innerhalb dieser Ebene aufweist.

In dieser ersten Ebene weist die Führungsfläche zudem erfindungsgemäß auch einen konvexen Schnittlinienabschnitt auf.

In einer zweiten Ebene, welche echt parallel zur ersten Ebene liegt, demnach insbesondere parallel aber nicht identisch ist, weist die Führungsfläche mindestens einen zweiten konkaven Schnittlinienabschnitt auf. Insbesondere ist die zweite Ebene die Ebene, welche nächstliegend zum Auslaufende angeordnet ist und mindestens einen konkaven Schnittlinienabschnitt aufweist. Die konkaven Schnittlinienabschnitte, insbesondere der ersten und zweiten Ebene, können identisch oder unterschiedliche ausgeführt sein.

Vorteilhafterweise weist die Vorrichtung in der ersten und/oder zweiten Ebene mindestens zwei konkave Schnittlinienabschnitte auf und/oder in der ersten Ebene mindestens zwei konvexe Schnittlinienabschnitte auf. Durch eine solche vorteilhafte Weiterbildung lässt sich besonders einfach und genau ein Profil mit zwei gegenläufigen Biegungen und/oder Knicken im Querschnitt, beispielsweise ein Z-, Hut-, U-, Doppel-T- oder ein Omega-Profil, formen.

Insbesondere ist die Vorrichtung eingerichtet, wird das Verfahren so geführt und/oder ist das Werkstück so ausgebildet, dass das Werkstück und/oder die umgelenkte Form ein L-, U-, Z-, Hut- oder Ω(Omega)-Profil oder ein geschlossenes Profil, wie ein O-Profil oder ein Rechteckprofil oder ein Profil mit mehreren umschlossenen Hohlräumen wie ein Doppelrechteckprofil ist. Ein geschlossenes Profil oder ein Profil mit einem oder mehreren vollständig umschlossenen Hohlräumen lässt sich beispielsweise durch eine Umformung erreichen, bei der die Seiten des Faserhalbzeugs zusammengeführt werden oder mindestens eine Seite des Faserhalbzeug umgelenkt wieder an das Faserhalbzeug herangeführt wird.

Einige Anordnungen des mindestens einen Niederhalters und des mindestens einen Formwerkzeugs sind besonders bevorzugt. Die Erfinder haben herausgefunden, dass insbesondere nachfolgende Anordnung des Niederhalters und des Formwerkzeugs bzw. somit der Kontaktoberfläche und der Führungsfläche in der ersten und zweiten Ebene von besonderem Vorteil ist.

So wird es bevorzugt, dass eine erste Länge zwischen Kontaktoberfläche und Führungsfläche in der ersten Ebene eine Länge im Bereich des 0,8- bis 1,2-fachen, insbesondere des 0,9- bis 1,1-fachen, insbesondere des 0,95- bis 1,05-fachen, insbesondere des einfachen, einer zweiten Länge zwischen Kontaktoberfläche und Führungsfläche in der ersten Ebene aufweist und/oder dass eine erste Länge zwischen Kontaktoberfläche und Führungsfläche in der ersten Ebene im Bereich des 0,8- bis 1,2-fachen, insbesondere des 0,9- bis 1,1-fachen, insbesondere des 0,95- bis 1,05-fachen, insbesondere des einfachen, einer zweiten Länge zwischen Kontaktoberfläche und Führungsfläche in der ersten Ebene liegt. Dabei wird die erste Länge entlang einer ersten Flächennormalen der Führungsfläche auf dem konkaven Schnittlinienabschnitt in der ersten Ebene gemessen. Die zweite Länge wird entlang einer zweiten Flächennormalen der Führungsfläche auf dem konkaven Schnittlinienabschnitt in der ersten Ebene gemessen. Die erste Flächennormale und zweite Flächennormale in der ersten Ebene stehen dabei erfindungsgemäß in einem Winkel zwischen 30° und 45° zueinander. Die erste Länge weist somit beispielsweise annähernd die selbe Länge auf wie die zweite Länge, wobei sich die für die Bestimmung verwendeten Flächennormalen in einem Winkel zwischen 30° und 45° schneiden, insbesondere grenzen die Flächennormalen nicht direkt aneinander, sondern sind sie, insbesondere in dem konkaven Schnittlinienabschnitt, voneinander so beabstandet sind, dass beide Flächennormalen sich in einem Winkel zwischen 30° und 45° schneiden. Somit wird beispielsweise sichergestellt, dass der Niederhalter, der die Kontaktoberfläche ausbildet, in der Nähe eines Abschnitts der Führungsfläche angeordnet ist, in welchem die Umformung erfolgen soll und somit ein konkaver Abschnitt, beispielsweise für den Knick in einem L-, U-, Hut- oder Omega Profil, in diesem Schnittlinienabschnitt geformt wird.

Diese Bedingung ist auch gegeben, wenn die erste und zweite Länge den Betrag von null aufweisen, der Niederhalter also an der Führungsfläche an beiden Flächennormalen anliegt. Insbesondere weisen alle entlang der zwischen der ersten und zweiten Flächennormalen befindlichen Flächennormalen gemessenen Längen ebenfalls eine Länge im genannten Bereich auf. Insbesondere werden dazu möglichst die Flächennormalen als erste und zweite Länge betrachtet, die die genannten Bedingungen erfüllen und entlang der Schnittlinie gemessen den größten Abstand voneinander aufweisen.

Erfindungsgemäß weist eine dritte Länge zwischen Kontaktoberfläche und Führungsfläche in der zweiten Ebene eine Länge im Bereich des 0,8- bis 1,2-fachen, insbesondere des 0,9- bis 1,1-fachen, insbesondere des 0,95- bis 1,05-fachen, insbesondere des einfachen, einer vierten Länge zwischen Kontaktoberfläche und Führungsfläche in der zweiten Ebene auf und/oder liegt eine dritte Länge zwischen Kontaktoberfläche und Führungsfläche in der zweiten Ebene im Bereich des 0,8- bis 1,2-fachen, insbesondere des 0,9- bis 1,1-fachen, insbesondere des 0,95- bis 1,05-fachen, insbesondere des einfachen, einer vierten Länge zwischen Kontaktoberfläche und Führungsfläche in der zweiten Ebene. Dabei wird die dritte Länge entlang einer dritten Flächennormalen der Führungsfläche auf dem konkaven Schnittlinienabschnitt in der zweiten Ebene gemessen. Die vierte Länge wird entlang einer vierten Flächennormalen der Führungsfläche auf dem konkaven Schnittlinienabschnitt in der zweiten Ebene gemessen. Die dritte Flächennormale und vierte Flächennormale in der zweiten Ebene stehen dabei erfindungsgemäß in einem Winkel zwischen 30° und 45° zueinander. Die dritte Länge weist somit beispielsweise annähernd die selbe Länge auf wie die vierte Länge, wobei die hierfür verwendeten Flächennormalen insbesondere nicht direkt aneinander angrenzen, sondern in dem konkaven Schnittlinienabschnitt voneinander so beabstandet sind, sodass beide Flächennormalen sich in einem Winkel zwischen 30° und 45° schneiden. Somit wird beispielsweise sichergestellt, dass der Niederhalter, der die Kontaktoberfläche ausbildet, in der Nähe eines Abschnitts der Führungsfläche angeordnet ist, in welchem die Umformung erfolgen soll und somit ein konkaver Abschnitt, beispielsweise für den Knick in einem L-, U-, Hut- oder Omega Profil, in diesem Schnittlinienabschnitt geformt wird.

Diese Bedingung ist auch gegeben, wenn die dritte und vierte Länge den Betrag von null aufweisen, der Niederhalter also an der Führungsfläche anliegt. Diese Bedingung ist auch gegeben, wenn die dritte und vierte Länge den Betrag von null aufweisen, der Niederhalter also an der Führungsfläche an beiden Flächennormalen anliegt. Insbesondere weisen alle entlang der zwischen der dritten und vierten Flächennormalen befindlichen Flächennormalen gemessenen Längen ebenfalls eine Länge im genannten Bereich auf. Insbesondere werden dazu die möglichst Flächennormalen als dritte und vierte betrachtete, die die genannten Bedingungen erfüllen und entlang der Schnittlinie gemessen den größten Abstand voneinander aufweisen.

Insbesondere ist die erste, zweite, dritte und/oder vierte Länge ein erster, zweiter, dritter und/oder vierter Abstand zwischen Kontaktoberfläche und Führungsfläche in der jeweiligen, ersten oder zweiten, Ebene. Dabei kann die erste und/oder dritte Länge, wie die erste und/oder zweite, auch null sein, insbesondere der Abstand auch null sein, insbesondere wenn kein Faserhalbzeug zwischen Niederhalter und Formwerkzeug vorhanden ist und/oder der Niederhalter insbesondere federnd und/oder federbelastet an die Führungsfläche angedrückt wird/ist und insbesondere unter Einschieben eines Faserhalbzeuges zwischen Niederhalter und Führungsfläche einen Abstand ausbildet und/oder ausbilden kann. Insbesondere sind die obigen Anforderungen an die relative Position von Niederhaltet und Führungsfläche (insbesondere erste, zweite, dritte und/oder vierte Länge) auch dann eingehalten, wenn sich eine Faserhalbzeug, insbesondere homogener und/oder über Länge und/oder Breite konstanter Dick zwischen Niederhalter und Führungsfläche befindet.

Vorteilhafterweise ist die erste, zweite, dritte und/oder vierte Länge und/oder Abstand maximal höchstens 10 dm und/oder ist der Niederhalter und/oder die Führungsfläche und/oder das Formwerkzeug so eingerichtet, dass die erste, zweite, dritte und/oder vierte Länge und/oder Abstand maximal höchstens 10 dm ist.

Weiterhin erfindungsgemäß liegt die erste Länge dabei im Bereich des 0,8- bis 1,2-fachen, insbesondere des 0,9- bis 1,1-fachen, insbesondere des 0,95- bis 1,05-fachen, insbesondere des einfachen, der dritten Länge. Damit wird beispielsweise sichergestellt, dass die Umformung in der ersten Ebene gleich oder zumindest ähnlich, insbesondere präzise, erfolgt wie in der zweiten Ebene. Somit ergibt sich vorteilhafterweise eine gleichmäßige Umformung eines Faserhalbzeuges bei Verwendung einer erfindungsgemäßen Umformvorrichtung.

Diese Bedingung ist auch gegeben, wenn die dritte und erste Länge den Betrag von null aufweisen, der Niederhalter also an der Führungsfläche anliegt.

Die erste aber auch die zweite Ebene schneidet somit die Führungsfläche, wodurch sich jeweils eine Schnittlinie in der Führungsfläche ergibt. Erfindungsgemäß unterscheidet sich dabei die Schnittlinie der mindestens einen Führungsfläche mit der ersten Ebene von der Schnittlinie der mindestens einen Führungsfläche mit der zweiten Ebene. Beispielsweise weist die Schnittlinie in der ersten Ebene ausgehend von einem ersten Ende der Schnittlinie einen ersten Abschnitt mit einer ersten Abschnittslänge und einen zweiten sich an den ersten Abschnitt anschließenden und sich bis zum dem ersten Ende der Schnittlinie in der ersten Ebene gegenüberliegenden Ende der Schnittlinie oder bis zu einem weiteren an den zweiten Abschnitt anschließenden Abschnitt erstreckenden Abschnitt mit einer zweiten Abschnittslänge und die Schnittlinie in der zweiten Ebene ausgehend von einem ersten Ende, welches auf demselben Seitenende der Führungsfläche liegt wie das erste Ende der Schnittlinie in der ersten Ebene, einen ersten Abschnitt mit einer dritten Abschnittslänge und einen zweiten sich an den ersten Abschnitt anschließenden und sich bis zum dem ersten Ende der Schnittlinie in der zweiten Ebene gegenüberliegenden Ende der Schnittlinie oder bis zu einem weiteren an den zweiten Abschnitt anschließenden Abschnitt erstreckenden Abschnitt mit einer vierten Abschnittslänge, wobei die erste Abschnittslänge sich von der dritten Abschnittslänge und/oder die zweite Abschnittslänge sich von der vierten Abschnittslänge unterscheidet und wobei sich sowohl in der ersten als auch in der zweiten Ebene der erste Abschnitt, insbesondere zumindest im Mittel, entlang einer Richtung erstreckt, welche Richtung sich von der Richtung, in welcher sich der zweite Abschnitt, insbesondere zumindest im Mittel, erstreckt, unterscheidet .

Die erfindungsgemäße Umformvorrichtung unterscheidet sich somit insbesondere aufgrund des konkaven Schnittlinienabschnitt neben weiteren Schnittlinienabschnitten und deren Anordnungen von den Umformvorrichtungen des Standes der Technik. Mithilfe einer erfindungsgemäßen Führungsfläche und Kontaktflächen ist es insbesondere möglich, eine endlose Herstellung eines in der erfindungsgemäßen Umformvorrichtung geformten Materials, insbesondere Faserhalbzeug, zu realisieren, wobei mittels des erfindungsgemäßen Schnittlinienabschnitt das Material wenige bis keine Falten durch den Umformprozess aufzeigt. Vorteilhafterweise weist der Umformabschnitt eine Länge von mehr als 1 cm, insbesondere mehr als 1 dm, und/oder eine Länge von maximal 10 m, insbesondere maximal 5 m auf. Vorteilhafterweise weist der Umformabschnitt eine Breite von mehr als 1 cm, insbesondere mehr als 1 dm, und/oder eine Breite von maximal 5 m, insbesondere in der ersten Ebene, auf. Vorteilhafterweise wird das Faserhalbzeug durch die Umformvorrichtung geführt, insbesondere gezogen, und insbesondere die Form und/oder das Profil des Faserhalbzeugs über die Breite des Faserhalbzeugs mit der und durch die Umformvorrichtung bearbeitet, insbesondere umgelenkt. Insbesondere wird das Faserhalbzeug über seine, und insbesondere langgestreckte, Breite in einer Ebene, insbesondere Einlaufebene, eingeführt.

Vorteilhafterweise ist der Abstand zwischen der ersten und der zweiten Ebene, insbesondere gemessen entlang der ersten Richtung, größer als die erste und die dritte Länge, insbesondere um mindestens das 10-fache größer als die erste und die dritte Länge. Insbesondere ist der Abstand zwischen erster und zweiter Ebene, insbesondere gemessen entlang der ersten Richtung, größer als 30 cm, insbesondere größer als 50 cm, insbesondere größer als 100 cm. Bei der erfindungsgemäßen Umformvorrichtung handelt es sich demnach vorteilhafterweise um eine Vorrichtung mit einem Umformabschnitt, der eine Längserstreckung aufweist die größer ist als der Abstand zwischen Niederhalter und Formwerkzeug bzw. Kontaktoberfläche und Führungsfläche bzw. dem Abschnitt bzw. Spalt in welchem das Material, insbesondere Faserhalbzeug, geformt bzw. umgelenkt wird.

Vorteilhafterweise weist mindestens eine Kontaktoberfläche des mindestens einen Niederhalters, insbesondere jede Kontaktoberfläche des mindestens einen Niederhalters und/oder aller Niederhalter, geschnitten mit einer Ebene quer, insbesondere senkrecht, zur ersten Richtung, insbesondere in der ersten und/oder zweiten und/oder einer zur ersten und/oder zweiten echt parallelen weiteren Ebene, einen ersten konvexen Niederhalterschnittlinienabschnitt auf. Insbesondere weist der Niederhalter mit seiner Kontaktoberfläche einen, insbesondere annähernd und/oder exakt, zum konkaven Schnittlinienabschnitt der Führungsfläche oder eines Teils von mindesten 50% komplementären konvexen Niederhalterschnittlinienabschnitt in einer Ebene quer, insbesondere senkrecht, zur ersten Richtung, insbesondere in der ersten und/oder zweiten und/oder einer zur ersten und/oder zweiten echt parallelen weiteren Ebene, auf. Durch eine solche Geometrie des Niederhalters lässt sich eine Umformung besonders vorteilhaft realisieren, insbesondere aufgrund eines relativ großflächigen und gleichzeitig gezielten Kontakts lediglich in genau den Abschnitten, in welchen das Material, insbesondere Faserhalbzeug, umgeformt bzw. umgelenkt werden soll. Insbesondere ist die Komplementarität unter Anlage eines Faserhalbzeuges auf die Führungsfläche und Betrachtung der von der Führungsfläche abgewandten Oberfläche des Faserhalbzeuges als Führungsfläche zu beurteilen.

Vorteilhafterweise weist die mindestens eine Führungsfläche und/oder Kontaktfläche eine Rampe auf und/oder ist die mindestens eine Führungsfläche und/oder Kontaktfläche zumindest teilweise als Rampe ausgebildet. Insbesondere ist die Vorrichtung ausgebildet das Faserhalbzeug zumindest über eine Länge von 10 cm, insbesondere mindestens 0,5 m, über diese Rampe und/oder an dieser Rampe flächig, insbesondere über eine Länge von mindestens 10 cm, insbesondere mindestens 0,5m, und insbesondere die Breite der Rampe, anliegend über dies Rampe zu ziehen. Vorteilhafterweise bildet die Führungsfläche die Rampe zumindest in einem mittleren Bereich, insbesondere mittleren Bereich der Breite der Führungsfläche und/oder des Umformabschnitts und/oder der Umformvorrichtung und/oder mittleren Bereich quer, insbesondere senkrecht, zur ersten Richtung verlaufend, aus. Eine solche Ausgestaltung ermöglicht insbesondere eine einfache Bearbeitung, Umformung bzw. Umlenkung, des Materials, insbesondere Faserhalbzeugs, in die gewünschte Form, ohne dabei jedoch eine Faltenbildung in dem Material, insbesondere Faserhalbzeug insbesondere des Faserformhalbzeuge, während und durch die Umformung zu verursachen, wobei zugleich eine endlose Herstellung des geformten Materials, insbesondere Faserformhalbzeuge, möglich ist. Insbesondere erstreckt sich die Rampe zumindest von der ersten zur zweiten Ebene.

Vorteilhafterweise weist in einer zwischen ersten und zweiten Ebenen angeordneten, zur ersten und/oder zweiten Ebene parallelen, insbesondere echt parallelen, dritten Ebene die Führungsfläche sowohl einen konkaven als auch einen konvexen Schnittlinienabschnitt auf, wobei der Abstand der dritten Ebene zur ersten Ebene und/oder zur zweiten Ebene mindestens 20% der Erstreckung des Umformabschnitts und/oder mindestens 0,2 m beträgt und/oder die dritte Ebene zwischen der ersten und zweiten Ebene angeordnet ist.

Entsprechend schneidet somit auch die dritte Ebene die Führungsfläche, bildet somit eine Schnittlinie mit der Führungsfläche aus. Vorteilhafterweise unterscheidet sich die Schnittlinie der mindestens einen Führungsfläche in der ersten Ebene von der Schnittlinie der Führungsfläche in der dritten Ebene. Vorteilhafterweise unterscheidet sich ein erster Schnittlinienabschnittsabstand zwischen konkaven und konvexen Schnittlinienabschnitt in der ersten Ebene von einem zweiten Schnittlinienabschnittsabstand zwischen konkaven und konvexen Schnittlinienabschnitt in der dritten Ebene. Vorteilhafterweise ist der erste Schnittlinienabschnittsabstand kleiner als der zweite Schnittlinienabschnittsabstand, insbesondere um mindestens 10% des zweiten Schnittlinienabschnittsabstand kleiner. Mittels der vorteilhaften Ausgestaltungen der Führungsfläche in der ersten und dritten Ebene lässt sich besonders einfach eine Veränderung der Form bewirken, ohne dabei in dem Material, insbesondere Faserhalbzeug, zusätzliche Spannungen aufzubauen, welche wiederum zu Falten oder Ondulationen in dem Material, während und durch die Umformung bzw. Umlenkung, führen könnten.

Vorteilhafterweise weist der mindestens eine Niederhalter eine erste Längserstreckung auf, wobei die erste Längserstreckung insbesondere nicht parallel zur ersten Richtung und/oder zu einer Vorschubrichtung, insbesondere am Einlaufende, und/oder zu einer/der ersten Umformebene und/oder zu einer Tangentialfläche des Formwerkzeugs tangential an dem Einlaufende und parallel zur ersten Richtung und/oder einer/der Vorschubrichtung liegt, insbesondere nicht parallel in der Ebene liegt, welche die Form der Führungsfläche am Einlaufende am besten approximiert. Eine solche vorteilhafte Ausbildung der ersten Längserstreckung des Niederhalters ergibt somit eine Anordnung des Niederhalters, sodass sich im Verlauf der Umformung und/oder einer Umlenkung des Faserhalbzeugs während der Translation des Faserhalbzeugs durch den Umformabschnitt das geformte Profil ändert.

Vorteilhafterweise weist der mindestens eine Niederhalter eine erste Längserstreckung und/oder eine Breitenerstreckung auf, wobei sich die erste Längserstreckung nicht senkrecht zur ersten Richtung und/oder zu einer Vorschubrichtung, insbesondere am Einlaufende, und/oder zu einer/der ersten Umformebene und/oder zu einer Tangentialfläche des Formwerkzeugs tangential an dem Einlaufende und parallel zur ersten Richtung und/oder einer/der Vorschubrichtung erstreckt, insbesondere sich nicht senkrecht zu der Ebene erstreckt, welche die Form der Führungsfläche am Einlaufende am besten approximiert. Bei dem erfindungsgemäßen Niederhalter handelt es sich somit vorteilhafterweise nicht um eine Rolle, die eine Symmetrieachse und/oder Längserstreckung senkrecht zur ersten Richtung und/oder Vorschubrichtung aufweist, wobei entlang dieser Erstreckung und einer hierzu parallelen Achse die Rolle drehbar gelagert ist, um den Vorlauf des Faserhalbzeugs zu unterstützen und voranzutreiben.

Vorteilhafterweise weist der Niederhalter eine erste Längserstreckung und die Führungsfläche eine, insbesondere zur ersten Längserstreckung parallele, zweite Längserstreckung auf, wobei das Verhältnis von erster Längserstreckung zur zweiten Längserstreckung, insbesondere deren Längen, im Bereich von 0,8 bis 1,2, insbesondere von 0,9 bis 1,1, liegt, insbesondere die Länge der ersten Längserstreckung der zweiten Längserstreckung entspricht.

Vorteilhafterweise ist die relative Position zwischen dem mindestens einen Niederhalter und dem mindestens einen Formwerkzeug und/oder der mindestens einen Führungsfläche und/oder die erste, zweite, dritte und/oder vierte Länge steuerbar veränderbar. Vorteilhafterweise lässt sich mit einer solchen Steuerung vor Beginn des Einführens eines Anfangs eines Faserhalbzeuges für dieses Einführen der Abstand zwischen Niederhalter und dessen Kontaktoberfläche und der Führungsfläche vergrößern, sodass das Faserhalbzeug in das Einlaufende und den Anfang des Umformabschnitt geführt werden kann, insbesondere in den konvexen und konkaven Schnittlinienabschnitt in der ersten und insbesondere auch zweiten Ebene. Daraufhin kann der Abstand wieder verkleinert werden, sodass das Faserhalbzeug mit der Kontaktoberfläche und/oder der Führungsfläche in Kontakt gebracht werden oder dieser angenähert kann, und daraufhin im normalen Umformprozess die Umformung im kontinuierlichen Betrieb realisiert werden kann, die Anforderungen an die erste, zweite, dritte und/oder vierte Länge sind insbesondere zumindest während des kontinuierlichen Betriebs und/oder angenäherten Zustand gegeben.

Vorteilhafterweise ist das Formwerkzeug einteilig und/oder einstückig ausgebildet, insbesondere als einteilige und/oder einstückige Vorform. Alternativ ist das Formwerkzeug vorteilhafterweise aus einer Mehrzahl von Formwerkzeugteilen gebildet. Das einteilige und/oder das einstückige oder alternativ die Mehrzahl von Formwerkzeugteilen zusammen definieren, begrenzen und/oder bilden dabei die Führungsfläche aus.

Vorteilhafterweise weist die Umformvorrichtung mindestens zwei Niederhalter auf, wobei eine erster Niederhalterabstand zwischen zwei Niederhaltern in der ersten Ebene kleiner ist als ein zweiter Niederhalterabstand der zwei Niederhalter voneinander in der zweiten und/oder dritten Ebene. Alternativ weist die Umformvorrichtung vorteilhafterweise mindestens einen Niederhalter aus, der in der ersten Ebene und quer, insbesondere senkrecht, zur ersten Richtung eine erste Erstreckung aufweist, die kleiner ist als eine zweite Erstreckung des Niederhalters in der zweiten und/oder dritten Ebene quer, insbesondere senkrecht, zur ersten Richtung. Der Abstand der Niederhalter bzw. die Enden der Breite des Niederhalters verändert/verändern sich demnach vorteilhafterweise im Verlauf des Umformabschnitt, wobei der Abstand zwischen den Niederhaltern bzw. die Breite des Niederhalters größer wird.

Vorteilhafterweise ist der Niederhalter federnd, insbesondere relativ zum Formwerkzeug, gelagert. Damit lässt sich eine besonders einfache und schonende Kontaktierung des zu bearbeitenden, insbesondere zu verformenden bzw. umzulenkenden, Materials, insbesondere Faserhalbzeugs, realisieren.

Vorteilhafterweise ist der Niederhalter um eine erste zu seiner Längserstreckung parallele Achse drehbar gelagert und/oder besteht die Kontaktoberfläche des Niederhalters, insbesondere deren bzw. dessen äußerste Außenschicht, aus einem Material mit niedrigem Reibungskoeffizient, insbesondere einem Reibungskoeffizient, insbesondere der Haftreibung ($\mu_H$), insbesondere mit dem Faserhalbzeug als Bezugspunkt, von weniger als 0,8, insbesondere maximal 0,7, und/oder mehr als 0,01, insbesondere mindestens 0,03, insbesondere aus Polyoxymethylen und/oder Polytetrafluorethylen, beispielsweise Teflon, oder ist die Kontaktoberfläche des Niederhalters mit Polyoxymethylen und/oder Polytetrafluorethylen, beispielsweise Teflon, beschichtet. Zweck dieser Beschichtung ist eine möglichst geringe Reibung, da eine Reibung eine Kraft ausüben könnte, die entgegen der Vorschubrichtung wirkt und zu Falten führen kann. Im Vergleich hierzu weisen einige Rollen im Stand der Technik eine Beschichtung zur Erzielung einer hohen Reibung auf, um so das Material gezielt auszubreiten und zu dehnen oder vorzuschieben und/oder zu ziehen. Ein solcher Ansatz wird mittels der erfindungsgemäßen Niederhalter insbesondere nicht verfolgt.

Vorteilhafterweise weist eine Längserstreckung der mindesten einen Kontaktoberfläche, welche parallel zur ersten Richtung verläuft, mindestens 60% der zur ersten Richtung parallelen Erstreckung des Umformabschnitts auf, wobei insbesondere die Kontaktoberfläche über mindestens 50% der Längserstreckung durchgängig ist. Vorteilhafterweise ist die Kontaktoberfläche kein Teil einer Rolle, welche lediglich den Vorlauf oder Vorschub des Faserhalbzeugs und/oder Faserformhalbzeugs unterstützt und vorantreibt, erstreckt sich vielmehr nicht lediglich in einem kleinen Teil der Länge des Umformabschnitts oder lediglich über die Breite des Umformabschnitts, sondern über einen wesentlichen Teil, nämlich mindestens 60%, der Länge des Umformabschnitts.

Vorteilhafterweise weist die mindestens eine Führungsfläche des mindestens einen Formwerkzeug und/oder das mindestens eine Formwerkzeug eine Heizvorrichtung und/oder eine Kühlvorrichtung, insbesondere angeordnet auf der der Kontaktoberfläche des Niederhalters abgewandten Seite der ersten Führungsfläche und/oder innerhalb des Formwerkzeugs und/oder dessen Wandung, insbesondere der Wandung, deren Begrenzung die Führungsfläche bildet, auf und/oder ist die mindestens eine erste Führungsfläche des mindestens einen Formwerkzeugs beheizbar und/oder kühlbar. Hierdurch lassen sich vorteilhafterweise in dem Umformabschnitt durch das Formwerkzeug Bindemittel, welche das Faserhalbzeug beinhaltet, aktivieren bzw. deren Abbindung reduzieren oder auf Grund von Reibung eingebrachte Wärme abführen.

Vorteilhafterweise weist das mindestens eine Formwerkzeug und/oder die mindestens eine Führungsfläche an der ersten Ebene eine erste Quererstreckung in der ersten Ebene, insbesondere parallel zur Umformebene, und der mindestens eine Niederhalter, insbesondere alle Niederhalter, und/oder die mindestens eine Kontaktoberfläche, insbesondere alle Kontaktoberflächen, in der ersten Ebene, insbesondere parallel zur Umformebene, eine zweite Quererstreckung auf, wobei die erste Quererstreckung länger ist als die zweite Quererstreckung, insbesondere um mindestens 50% der zweiten Quererstreckung. Vorteilhafterweise umschließt das mindestens eine Formwerkzeug und/oder die mindestens eine Führungsfläche in der ersten Ebene mit seiner ersten Quererstreckung zumindest teilweise die zweite Quererstreckung, insbesondere mindestens 80% der zweiten Quererstreckung, des mindestens einen Niederhalters und/oder der mindestens einen Kontaktoberfläche in der ersten Ebene und/oder dritten Ebene.

Vorteilhafterweise weist das Umlenkmittel und/oder das mindestens eine Formwerkzeug, insbesondere der Einlaufabschnitt und/oder die mindestens eine Führungsfläche, insbesondere eine Kante der Führungsfläche, ein Einlaufelement auf.

Das Einlaufelement kann einteilig mit der Führungsfläche und/oder separat ausgebildet. Es kann sich direkt an die Führungsfläche anschließen oder einen Abstand davon aufweisen, wobei es insbesondere zwischen Bereitstellung, insbesondere mindestens einem Umlenkmittel, und der Führungsfläche angeordnet ist. Es ist insbesondere so ausgebildet, dass das Faserhalbzeug über seine Breite unterschiedlich lange Wege über das Einlaufelement und/oder durch das Einlaufelement induziert zurück legen muss, bis es auf die Führungsfläche trifft, insbesondere der Art, dass es Weglängenunterschied über die Breite des Faserhalbzeugs bei der Passage über die Führungsfläche zumindest teilweise, insbesondere vollständig, ausgleicht. Dazu weist es insbesondere über seine Erstreckung senkrecht zur ersten Richtung und/oder parallel zur Breite des Faserhalbzeugs unterschiedliche Krümmungen und/der Radien auf. Insbesondere ist es sphärisch ausgebildet und/oder weist insbesondere mindestens eine Rundung auf, deren Oberflächenlinien in Richtung des Transportes des Faserhalbzeugs über das Einlaufelement insbesondere Kreis- und/oder Ellipsenbögenabschnitte sind, deren Rotationsachse oder Achse senkrecht zur Zeichenebene und durch den Schwerpunkt parallel zur Breite des Faserhalbzeugs beim Transport über das Einlaufelement, Umlenkmittel und/oder den Beginn der Führungsfläche angeordnet sind.

Alternativ und/oder zusätzlich kann das Einlaufelement so ausgebildet sein, dass es über seine Längserstreckung, insbesondere senkrecht zur ersten Richtung und/oder parallel zur Längserstreckung eines Umlenkmittels und/oder parallel zur Breite des Faserhalbzeugs angeordnet ist, unterschiedliche Breiten aufweist und/oder so ausgebildet ist, dass die Kontaktlänge des Faserhalbzeugs mit dem Einlaufelement über die Breite des Faserhalbzeugs unterschiedlich, insbesondere nach außen hin jeweils abnehmend, ausgebildet ist. Das Einlaufelement kann somit beispielsweise mit über seine Längserstreckung nach außen hin abnehmenden Oberflächenerstreckungen ausgestaltet sein.

Vorteilhafterweise weist das Umlenkmittel und/oder das mindestens eine Formwerkzeug, insbesondere der Einlaufabschnitt und/oder die mindestens eine Führungsfläche, und/oder das Einlaufelement in einer zur ersten Ebene oder angrenzenden parallelen oder an die erste Ebene angrenzenden Einlaufebene quer, insbesondere senkrecht, zur Einlaufebene und parallel zur ersten Richtung eine Biegung von maximal 1 rad, insbesondere maximal 0,5 rad, insbesondere maximal 0,1 rad, insbesondere maximal 0,05 rad, wobei die erste Ebene zwischen der Einlaufebene und der zweiten und/oder dritten Ebene liegt. Vorteilhafterweise weist die Führungsfläche somit eine Biegung am Anfang der Führungsfläche auf, wobei die Biegung vorzugsweise gering, nämlich weniger als 0,5 rad ist.

Vorteilhafterweise sind die mindestens eine Kontaktoberfläche und die mindestens eine Führungsfläche so ausgebildet, dass die Kontaktoberfläche kleiner ist als die Führungsfläche.

Gelöst wird die Aufgabe auch durch ein System zur kontinuierlichen Herstellung von, insbesondere endlosen, Faserformhalbzeugen. Das System weist erfindungsgemäß eine Bereitstellungsvorrichtung auf. Die Bereitstellungsvorrichtung stellt dabei Faserhalbzeug bereit. Insbesondere stellt die Bereitstellungsvorrichtung das Faserhalbzeug lediglich bereit und schiebt das Faserhalbzeug nicht in Richtung weiterer Vorrichtungen des erfindungsgemäßen Systems. Das System weist erfindungsgemäß zudem eine Zugvorrichtung auf, insbesondere an dem der Bereitstellungsvorrichtung abgewandten Ende des Systems, mittels welcher Faserhalbzeug von der Bereitstellungsvorrichtung entnommen, insbesondere gezogen wird. In dem erfindungsgemäßen System wird somit das Faserhalbzeug gezogen und nicht durch das System geschoben. Weiterhin weist das erfindungsgemäße System zwischen der Bereitstellungsvorrichtung und der Zugvorrichtung eine erfindungsgemäße Umformvorrichtung und einen zwischen Umformvorrichtung und Bereitstellungsvorrichtung angeordneten Einführungsabschnitt auf.

Ein Vorteil des erfindungsgemäßen System liegt dabei darin, dass aufgrund des Ziehens des Faserhalbzeugs durch die Umformvorrichtung und des Einsatzes einer erfindungsgemäßen Umformvorrichtung das Herstellen eines, insbesondere endlosen, Faserformhalbzeug einfacher realisierbar ist, wobei die Bildung von Falten oder Ondulationen dadurch während des und durch das Durchlaufen des Faserhalbzeugs durch die Umformvorrichtung zumindest weitgehend vermindert wird.

Alle zuvor beschriebenen Ausführungen und deren Vorteile bezüglich der erfindungsgemäßen Umformvorrichtung sind auch in dem erfindungsgemäßen System vorteilhaft realisierbar.

Vorteilhafterweise weist der Einführungsabschnitt mindestens ein erstes Umlenkmittel, insbesondere Umlenkrolle und/oder Umlenkblende, zum Führen des entnommenen Faserhalbzeugs auf, wobei insbesondere ein, insbesondere alle, kürzester/n Verbindungsvektor(en) vom Umlenkmittel zum Einlaufende zur ersten Richtung einen Winkel kleiner oder gleich 90° einschließen.

Vorteilhafterweise ist das Einlaufende, insbesondere dessen Kante in einer oder angrenzend an eine Einlaufebene senkrecht zur ersten Ebene, konvex und/oder das Umlenkmittel, insbesondere dessen Kante und/oder in einer oder angrenzend an eine Umlenkebene senkrecht zur ersten Ebene und/oder parallel zur Einlaufebene, konvex ausgebildet. Durch eine solche Ausgestaltung des Einlaufendes und/oder des Umlenkmittels, lässt sich besonders einfach die Faltenbildung verhindern, da durch eine solche Ausbildung die Führung der Außenseiten des Faserhalbzeuges und/oder Faserformhalbzeugs so erfolgt, dass diese im Laufe der Führung in Richtung des Auslaufendes erst später von dem Einlaufende bzw. dem Umlenkmittel erfasst und/oder gestraft werden, somit das Faserhalbzeug in den Außenbereichen einen kürzeren Weg von Umlenkmittel zum Einlaufende haben bzw. nehmen müssen, wobei der kürzere Weg durch das Umlenken bis hin zum Auslaufende allerdings zumindest teilweise ausgeglichen wird, sodass beim Ziehen durch die Zugvorrichtung hinter der Umformvorrichtung ein möglichst gleichmäßiger Zug über die gesamte Breite des Faserhalbzeugs erfolgt. Der Vorteil ist dabei, dass die Spannung durch die Umformung auf dem Faserhalbzeug in Vorschubrichtung möglichst gleich über die Breite des Faserhalbzeugs verteilt wird. Es wird also bevorzugt, die Vorrichtung und/oder das System und/oder das Verfahren so auszugestalten, dass der Weg insbesondere durch die Vorrichtung und/oder das System, des Faserhalbzeuges über dessen Breite konstant ist. Da dies über den Umformabschnitt nicht der Fall ist, wird es bevorzugt, die entstehende Differenz der Weglänge über die Breite in einem anderen, insbesondere vorgelagertem, Abschnitt zumindest teilweise, insbesondere vollständig, ausgeglichen wird Vorteilhafterweise ist mindestens eine Spritzvorrichtung und/oder Tränkvorrichtung zur Aufbringung eines Bindemittels, beispielsweise eines Harzes, vor und/oder nach der Umformvorrichtung und/oder in dem Umformabschnitt angeordnet. Vorteilhafterweise ist eine Aushärtevorrichtung nach der Spritzvorrichtung und/oder Tränkvorrichtung oder an und/oder nach der Umformvorrichtung und/oder dem Umformabschnitt angeordnet, insbesondere vor der Aushärtevorrichtung. Bei einem schon mit einem Bindemittel versehenen Faserhalbzeug bedarf es einer Spritzvorrichtung und/oder Tränkvorrichtung nicht. Mittels einer Spritzvorrichtung und/oder Tränkvorrichtung wird also vorteilhafterweise in dem System, insbesondere bei einem nicht vorbehandelten Faserhalbzeug oder einem Faserhalbzeug ohne einem darin enthaltenen Bindemittel, ein Bindemittel zugegeben, welches im weiteren Verlauf, beispielsweise mittels der Aushärtevorrichtung, ausgehärtet wird, sodass das mittels der Umformvorrichtung geformte Profil des Faserformhalbzeugs in dieser Form verbleibt und darin versteift wird.

Offenbart ist auch ein Verfahren unter Einsatz eines erfindungsgemäßen Systems und/oder einer erfindungsgemäßen Umformvorrichtung.

Offenbart ist auch ein Verfahren zum Umformen eines Faserhalbzeus. Dabei wird das Faserhalbzeug und/oder Faserformhalbzeugs, insbesondere mittels einer Zugvorrichtung, durch eine mindestens einen Niederhalter und mindestens ein Formwerkzeug aufweisenden Umformvorrichtung gezogen. Zuvor wird es insbesondere von einer Bereitstellungsvorrichtung gezogen bzw. abgezogen. Vorteilhafterweise handelt es sich bei der Umformvorrichtung um eine erfindungsgemäße Umformvorrichtung, insbesondere in einem erfindungsgemäßen System. Dabei wird das Werkstück vorteilhafterweise, insbesondere gemessen in Richtung des Zuges, insbesondere in Projektion auf die Führungsfläche und/oder in der ersten und/oder zweiten Ziehebene, mindestens über 10 cm Länge der Führungsfläche an der Führungsfläche anliegend über die Führungsfläche gezogen. Dabei weist die Führungsfläche insbesondere über die mindestens 10 cm Länge durchgehend mindestens einen konkaven Abschnitt auf.

Dabei wird in dem Verfahren eine Umformung des Faserhalbzeugs durch Umlenkung des Faserhalbzeugs beim Ziehen des Faserhalbzeugs durch das Ziehen durch mindestens einen Spalt bewirkt. Der Spalt ist dabei durch mindestens einen ersten konkaven Abschnitt mindestens einer ersten durch das mindestens eine Formwerkzeug definierten Führungsfläche und mindestens einer ersten Kontaktoberfläche des Niederhalters begrenzt. Vorteilhafterweise umfasst bei Einsatz einer erfindungsgemäßen Umformvorrichtung der erste konkave Abschnitt den ersten konkaven Schnittlinienabschnitt und weist der Spalt die erste, zweite, dritte und/oder vierte Länge als Breite, Länge oder Spaltmaß des Spalts auf.

Im Vergleich zu bisherigen Verfahren wird demnach das Faserhalbzeug und/oder Faserformhalbzeugs durch das System nicht geschoben, sondern gezogen. Aufgrund dessen bedurfte es einiger Modifikationen der Umformvorrichtung, des Systems und des Verfahrens. Weiterhin wird durch das Ziehen durch den Spalt ermöglicht, ein endloses Faserformhalbzeug herzustellen, wobei in dem Verfahren bzw. durch die Umformvorrichtung eine Faltenbildung verhindert bzw. vermindert wird.

Vorteilhafterweise wird das Faserhalbzeug über einen konvexen Abschnitt der Führungsfläche gezogen, insbesondere an einem ersten Ende, insbesondere einem der Bereitstellungvorrichtung zugewandten ersten Ende, der Umformvorrichtung. Zumindest an dem ersten Ende wird somit vorteilhafterweise das Faserhalbzeug teilweise und/oder zeitweise über einen konkaven Abschnitt und teils über einen konvexen Abschnitt der Führungsfläche gezogen.

Vorteilhafterweise weist der Spalt eine maximale Höhe und/oder einen maximalen Abstand zwischen Führungsfläche und Niederhalter von höchstens 10 dm auf und/oder der Niederhalter und/oder die Führungsfläche und/oder das Formwerkzeug so eingerichtet, dass der Spalt eine maximale Höhe und/oder einen maximalen Abstand zwischen Führungsfläche und Niederhalter von höchstens 10 dm aufweist.

Vorteilhafterweise wird in dem Verfahren die Umformung des Faserhalbzeugs zum Faserformhalbzeugs zumindest teilweise durch Umlenkung des Faserhalbzeugs beim Ziehen des Faserhalbzeugs durch das Ziehen durch den mindestens einen Spalt bewirkt, wobei das Faserhalbzeug durch einen mindestens 0,1 mm, insbesondere mindestens 0,5m, hohen Spalt gezogen wird.

Vorteilhafterweise wird eine Linie, insbesondere eine gedachte Linie, über die Breite des Faserhalbzeugs, insbesondere senkrecht zur Längserstreckung des Faserhalbzeugs oder zur Zugrichtung und/oder ersten Richtung und/oder Vorschubrichtung, gleichzeitig durch den Spalt, und insbesondere somit dem konkaven Abschnitt, und über den konvexen Abschnitt gezogen, insbesondere über mindestens 20 cm und/oder mindestens eine Länge gleich der Breite des Faserhalbzeugs.

Vorteilhafterweise wird ein erster, insbesondere mittlerer und/oder an dem Mittelpunkt der Breite anliegender, Abschnitt einer Linie über die Breite des Faserhalbzeugs von einer ersten Umformebene in eine zweite zur ersten Umformebene echt parallelen Umformebene gezogen. Vorteilhafterweise wird ferner ein zweiter Abschnitt der Linie über die Breite des Faserhalbzeugs, insbesondere währenddessen ausschließlich, in der ersten Umformebene geführt. Vorteilhafterweise weist ein solcher erster Abschnitt insbesondere eine Breite von mindestens 5%, insbesondere mindestens 10%, der Breite des Faserhalbzeugs in der ersten Umformebene auf. Vorteilhafterweise wird insbesondere der Abstand der zweiten Umformebene zur ersten Umformebene während der Passage über die Umformvorrichtung und/oder ein Abstand gemessen senkrecht zur Erstreckung des ersten und/oder zweiten Abschnitts der Linie zwischen ersten Abschnitt der Linie über die Breite und zweiten Abschnitt der Linie über die Breite während der Passage über die Umformvorrichtung vergrößert.

Die erste Umformebene erstreckt sich vorteilhafterweise horizontal und/oder parallel zur Längserstreckung der Umformvorrichtung und/oder parallel zu einem Vektor ausgehend vom Anfang, dem der Bereitstellungsvorrichtung nächstliegenden Ende, der Umformvorrichtung oder des Spalts hin zum Ende, dem der Zugvorrichtung nächstliegenden Ende, der Umformvorrichtung oder des Spalts.

Vorteilhafterweise verändert sich der Anfangs- und/oder Endpunkt des ersten und/oder zweiten Abschnitts auf der Linie über die Breite des Faserhalbzeugs während der Passage des Faserhalbzeugs durch die Umformvorrichtung.

Vorteilhafterweise ist neben ersten und zweiten Abschnitt ein dritter Abschnitt der Linie über die Breite des Faserhalbzeugs vorhanden, wobei der dritte Abschnitt, insbesondere dessen Länge über die Breite des Faserhalbzeugs, während der Passage des Faserhalbzeugs über die, insbesondere und aufgrund der, Umformvorrichtung vergrößert wird. Vorteilhafterweise liegt der dritte Abschnitt nicht in der ersten Umformebene und/oder nicht in der zweiten Umformebene und/oder grenzt der dritte Abschnitt direkt an den ersten und/oder zweiten Abschnitt an. Beispielsweise stellen in einem Omega (Ω) Profil die beiden unteren, äußeren Schenkel den zweiten Abschnitt dar, der mittlere, obere Abschnitt den ersten Abschnitt und die beiden Verbindungsabschnitte, die die Schenkel mit dem oberen Abschnitt verbinden, den dritten Abschnitt dar. Beispielsweise wird während der Passage somit aus einem anfänglichem flachen Faserhalbzeug mittels zweier Spalte der mittlere Bereich/erste Abschnitt aus einer ersten Umformebene in eine zweite Umformebene gehoben; im Verlaufe der Passage wird der mittlere Bereich/erster Abschnitt weiter weg von der ersten Umformebene/zweiter Abschnitt gezogen und gehoben, sodass der Zwischenbereich/dritter Abschnitt, zwischen mittlerem Bereich und Schenkel, vergrößert wird. Analoges gilt für die weiteren Profile, wie bspw. einem L-, Z- oder U-Profil.

Vorteilhafterweise wird ein erster, insbesondere mittlerer und/oder an dem Mittelpunkt der Breite anliegender, Abschnitt einer Linie über die Breite des Faserhalbzeugs während der Passage über die Umformvorrichtung in einer ersten Ziehebene (insbesondere eine erste Ebene des Formwerkzeugs, insbesondere der Führungsfläche), über die das Faserhalbzeug gezogen wird), und ein zweiter Abschnitt in einer zweiten Ziehebene (insbesondere eine zweite Ebene des Formwerkzeugs, insbesondere der Führungsfläche), über die das Faserhalbzeug gezogen wird) gezogen, wobei die erste und zweite Ziehebene sich in einer Schnittlinie unter Ausbildung eines Schnittwinkels von mehr als 0°, insbesondere mehr als 5°, und weniger als 90°, insbesondere weniger als 80°, schneiden, wobei sich die Schnittlinie insbesondere über nur einen Teil der Breite des Faserhalbzeugs erstreckt. Dabei entspricht die erste Umformebene insbesondere nicht der ersten Ziehebene.

Vorteilhafterweise wird das Faserhalbzeug in einem Bereich hinter einem ersten der Bereitstellungvorrichtung zugewandten Ende der Umformvorrichtung bei der Translation entlang des Spalts quer zur ersten Richtung umgelenkt. Im Vergleich zu den bisher im Stand der Technik bekannten Verfahren wird somit das Material nicht umgeklappt oder nicht durch eine Flanke der Führungsfläche umgeklappt, sondern insbesondere kontinuierlich umgelenkt.

Vorteilhafterweise wird das Faserhalbzeug über eine durch die Führungsfläche gebildete Rampe gezogen, insbesondere der erste Abschnitt. Dabei wird insbesondere der erste Abschnitt aus der ersten Umformebene entlang der ersten Ziehebene in die zweite Umformebene gezogen.

Vorteilhafterweise wird das Faserhalbzeug mittels der Kontaktoberfläche und/oder des Formwerkzeugs beheizt und/oder gekühlt und/oder ein Bindemittel in dem Faserhalbzeug aktiviert und/oder dessen Wirkung, insbesondere dessen Steifigkeit oder Aktivität, beeinflusst. Insbesondere wird das Faserhalbzeug vor der Bearbeitung, insbesondere Umlenkung, in der Umformvorrichtung und/oder vor einem Aushärten, insbesondere in einer Aushärtevorrichtung, und nach der Bearbeitung, insbesondere Umlenkung, in der Umformvorrichtung beheizt. Insbesondere wird das Faserformhalbzeugs nach der Bearbeitung, insbesondere Umlenkung, in der Umformvorrichtung und/oder nach der Beheizung, insbesondere mittels der Kontaktoberfläche und/oder des Formwerkzeugs, und/oder nach Aushärten, insbesondere in einer Aushärtevorrichtung, gekühlt.

Insbesondere wird dies do durchgeführt, dass das Faserhalbzeug so beeinflusst wird, dass es auf der Umformvorrichtung formbar ist. So kann es zum Beispiel sinnvoll sein bei Faserhalbzeug mit Thermoplasten dies vor und auf der Umformvorrichtung, insbesondere zu Beginn der Umformvorrichtung, zu heizen. Es kann sich auch anbieten, die Formbarkeit nach der Umformung (wieder) zu reduzieren, beispielsweise durch Kühlung eines Thermoplasts oder Aushärtung eines Bindemittels, beispielsweise durch Heizen und/oder UV-Einstrahlung. So kann es sinnvoll sein, nach der Passage der Umformvorrichtung und/oder am Ende der Passage der Umformvorrichtung ein die Thermoplaste aufweisendes Faserhalbzeug des Faserformhalbzeugs zu kühlen.

Vorteilhafterweise wird das Faserhalbzeug mittels mindestens eines zwischen Bereitstellungsvorrichtung und Umformvorrichtung angeordneten Umlenkmittels so geführt, dass über die Breite des Faserhalbzeugs die Wege des Faserhalbzeugs zwischen Bereitstellungsvorrichtung und dem von der Bereitstellungsvorrichtung abgewandten Ende der Umformvorrichtung zumindest teilweise angeglichen werden, insbesondere vollständig angeglichen werden und/oder über die Breite konstant sind, insbesondere alle Wege über die Breite des Faserhalbzeugs. Beispielsweise kann dies mittels eines Umlenkmittels dessen Kante proportional zum Profil ausgebildet ist, insbesondere eines erfindungsgemäßen Umlenkmittels und dessen konvexen Ausbildung, und/oder mittels eines erfindungsgemäßen Einlaufendes und dessen konvexen Ausbildung erfolgen. Weiter Möglichkeiten sind dabei für den Fachmann vorstellbar, wie beispielsweise zusätzliche Rollen oder Anhebungen beispielsweise am Einlaufende des Formwerkzeugs oder zusätzlicher weitere Umlenkungsmittel. Der Vorteil ist dabei, dass die Spannung durch die Umformung auf dem Faserhalbzeug in Vorschubrichtung gleichmäßiger über die Breite des Faserhalbzeugs verteilt wird.

Vorteilhafterweise wird das Faserhalbzeug und/oder Faserformhalbzeugs durch die Umformvorrichtung mittels Zugkräften quer zur ersten Richtung in der Umformvorrichtung, insbesondere in Ebenen zwischen der ersten und zweiten Ebene und parallele zu den ersten und zweiten Ebenen, umgelenkt und/oder umgeformt. Der Vorteil der erfindungsgemäßen Umformvorrichtung, des erfindungsgemäßen Systems und des Verfahrens besteht daher, dass durch die Zugkräfte quer zur Vorschubrichtung und/oder die kontinuierliche Umformung in jedem Abschnitt eine Ondulation und Faltenbildung während des Umformens durch den Umformprozess reduziert/unterbunden wird.

Vorteilhafterweise wird das Faserhalbzeug und/oder Faserformhalbzeugs nach dem Umformen und/oder Umlenken in der Umformvorrichtung mittels einer Aushärtevorrichtung, welche zwischen Zugvorrichtung und Umformvorrichtung angeordnet ist, in der durch die Umformvorrichtung umgelenkten Form versteift.

Vorteilhafterweise zieht die Zugvorrichtung lediglich an steifen, insbesondere biegesteifen, Abschnitten des Faserhalbzeugs, insbesondere des Faserformhalbzeuges, das Faserhalbzeug durch die Umformvorrichtung, insbesondere einem mittels einer, insbesondere erfindungsgemäßen, Aushärtevorrichtung versteiften Abschnitt des Faserhalbzeugs und/oder dadurch erzeugten Faserformhalbzeuges.

Vorteilhafterweise wird das Faserhalbzeug und/oder Faserformhalbzeug nach dem Umformen und/oder Umlenken in der Umformvorrichtung ausgehärtet und/oder vor dem Umformen und/oder Umlenken in der Umformvorrichtung und/oder vor einem Aushärten mit Bindemittel, beispielsweise mit einem Harz, insbesondere mittels einer, insbesondere erfindungsgemäßen, Spritzvorrichtung und/oder Tränkvorrichtung, welche insbesondere zwischen Umformvorrichtung und Bereitstellungsvorrichtung angeordnet ist, versehen. Vorteilhafterweise wird nach dem Umformen und/oder Umlenken in der Umformvorrichtung und/oder nach dem Tränken und/oder Bespritzen mit Bindemittel, insbesondere in der Spritzvorrichtung und/oder Tränkvorrichtung, insbesondere in einer Aushärtevorrichtung, welche insbesondere zwischen Umformvorrichtung, insbesondere Spritzvorrichtung und/oder Tränkvorrichtung, und Zugvorrichtung angeordnet ist, das Faserhalbzeug ausgehärtet.

Offenbart wird auch ein Verfahren zum Umformen eines Faserhalbzeug und/oder Formen eines Faserformhalbzeugs, wobei das Faserhalbzeug durch eine, insbesondere eine erfindungsgemäße, Umformvorrichtung gezogen wird, wobei das Fasermaterial mittels mindestens eines lang gestreckten Niederhalters und mindestens eines Formwerkzeugs in der Umformvorrichtung bearbeitet wird, wobei das Faserhalbzeug entlang und/oder parallel zu einer Längsachse des Niederhalters gezogen wird, und wobei das Faserhalbzeug entlang und/oder parallel zu einem zwischen einer konkaven Fläche des Formwerkzeugs, insbesondere einer durch das Formwerkzeugs definierten Führungsfläche, und Kontaktoberfläche des Niederhalters ausgebildeten Spalts gezogen wird.

Die erfindungsgemäße Umformvorrichtung, das erfindungsgemäße System sowie das Verfahren beansprucht unterschiedliche Anordnungen, teilweise definiert durch Bezug auf unterschiedliche Ebenen, unter anderem - gegebenenfalls mittels vorteilhafter Weiterbildung - die erste, zweite, dritte Ebene, die erste und zweite Umformebene, die Einlaufebene sowie die erste und zweite Ziehebene.

Dabei ist grundsätzlich bei diesen Ebenen von einer mathematischen Ebene im dreidimensionalen Raum auszugehen, welche somit keine Begrenzung in zwei Raumrichtungen aufweist, wobei es sich bei diesen Ebenen vorrangig lediglich um gedachte Ebenen und nicht um strukturelle Bauteile, die eine Ebene ausbilden, handelt.

Die erste, zweite und/oder dritte Ebene verläuft dabei ähnlich einer Schnittebene durch die Umformvorrichtung bzw. den Umformabschnitt. Die Führungsfläche weist erfindungsgemäß und inhärent eine Breite, Länge und eine Höhe auf, wobei die Höhe der Führungsfläche sich entlang der ersten und zweiten, und insbesondere auch dritten, Ebene erstreckt und die Höhe der Führungsfläche in der ersten Ebene auf Höhe der ersten Ebene kleiner ist als die Höhe der Führungsfläche in der zweiten Ebene auf Höhe der zweiten Ebene. Neben der Höhe erstreckt sich ebenso die Breite der Führungsfläche in der ersten und zweiten, und insbesondere auch dritten, Ebene. Insbesondere wird die Orientierung der ersten, zweiten und/oder dritten Ebene so gewählt, dass die und/oder alle kürzeste(n) Erstreckung(en) der Führungsfläche, die parallel zur Breite des Faserhalbzeugs liegt, und durch einen Punkt der jeweiligen Ebene geht vollständig in dieser Ebene liegt und/oder die erste, zweite und/oder dritte Ebene parallel zur Breite des Faserhalbzeugs liegt und/oder senkrecht zur ersten Richtung.

Bei dem Faserhalbzeug handelt es sich insbesondere um ein Faserhalbzeug mit einer Breite von mindestens 1 m, insbesondere mindestens 1,2 m, und/oder maximal 5 m, insbesondere maximal 3 m.

Vorteilhafterweise besteht das Formwerkzeug und/oder der Niederhalter aus Metall, kohlenstofffaserverstärktem und/oder glasfaserverstärktem Kunststoff, Polytetrafluorethylen, Polyoxymethylen, Holz und/oder einer Mischung aus den vorgenannten Materialien.

Mit Vorteil wird das Verfahren so geführt und/oder ist die Vorrichtung oder System so eingerichtet, dass das Werkstück, Faserformhalbzeug und/oder Faserhalbzeug mindestens zwei aufeinander angeordnete Faserlagen aufweist, wobei die Fasern der mindestens zwei Faserlagen zumindest zwei unterschiedliche Längserstreckungsrichtungen aufweisen und wobei die zwei unterschiedlichen Längserstreckungsrichtungen einen Winkel im Bereich von 30 bis 150°, insbesondere im Bereich von 40 bis 160°, einschließen. Insbesondere weist das Werkstück und/oder Faserformhalbzeug mindestens zwei aufeinander angeordnete Faserhalbzeuge auf.

Insbesondere ist die erfindungsgemäße Vorrichtung und/oder das erfindungsgemäße System zur Durchführung des Verfahrens eingerichtet.

Offenbart wird auch ein Werkstück bestehend aus mit Bindemitteln gehärtetem geformten Faserhalbzeug, wobei das Werkstück, Faserformhalbzeug und/oder Faserhalbzeug mindestens zwei aufeinander angeordnete Faserlagen aufweist. Insbesondere weist das Werkstück mindestens zwei aufeinander angeordnete Faserhalbzeuge auf.

Die Fasern der mindestens zwei Faserlagen weisen bevorzugt zumindest zwei unterschiedliche Längserstreckungsrichtungen aufweisen, wobei die zwei unterschiedlichen Längserstreckungsrichtungen insbesondere einen Winkel im Bereich von 30 bis 150°, insbesondere im Bereich von 40 bis 160°, einschließen.

Dabei kann es sich um mindestens zwei Lagen mit gerichteten Fasern oder um mindestens eine Lage mit Faserwirrlage handeln. Alternativ liegt zumindest eine Längserstreckungsrichtungen, insbesondere einer Lage mit gerichteten Längserstreckungsrichtungen in einem Winkel im Bereich von 30 bis 150°, insbesondere im Bereich von 40 bis 160°, zur Längserstreckung des Werkstücks und/oder zu der Richtung in der es pultrudiert und/oder bei der Formung gezogen wurde. Das Werkstück weist dabei eine Länge von mindestens 0,5 m. insbesondere mindestens 1 m, zur Längserstreckung des Werkstücks und/oder zu der Richtung in der es pultrudiert und/oder bei der Formung gezogen wurde auf.

Dabei weist das Werkstück in allen Querschnitten über die Länge quer, insbesondere senkrecht zur Länge mindestens eine Biegung, insbesondere eine Biegung des Faserhalbzeuges, insbesondere der mindestens zwei Lagen, insbesondere mindestens eines Teils der Fasern der Faserlagen, auf. Dabei weisen insbesondere die Fasern mindestens einer, insbesondere mindestens zweier, Längserstreckungsrichtungen mindestens einer, insbesondere mindestens zweier, Lage(n), eine Biegung, insbesondere um mindestens 30°, insbesondere mindestens 45°, insbesondere senkrecht zur Längserstreckung des Werkstücks und/oder zu der Richtung in der es pultrudiert und/oder bei der Formung gezogen wurde, auf.

Dabei weisen die Faserlagen und/oder Faserhalbzeuge bevorzugt eine Ondulation auf die geringer ist als nachfolgend angegeben, was auch keine Ondulation umfasst, und/oder liegen die Faserlagen jeweils parallel zueinander.

Die maximale Ondulationshöhe einer Faserlage des Werkstücks beträgt maximal ein Viertel der im Bereich der Ondulation vorhandenen Werkstückdicke oder Werkstückwandstärke, gemessen insbesondere in Richtung der Auslenkung der Ondulation, und/oder die maximale Höhe einer Ondulation, auch Ondulationshöhe, einer Faserlage des Werkstücks beträgt maximal 15% der Breite der Ondulation, insbesondere gemessen senkrecht zur Höhe.

Die Ondulationshöhe wird insbesondere in Richtung der Werkstück- oder Wandstärke gemessen. Die Ondulationsbreite wird insbesondere senkrecht dazu gemessen. Die Ondulationsbreite wird insbesondere gegeben durch den Abstand der Punkte auf der gedacht nicht ondulierten Faserlage, an denen der Verlauf der ondulierte Faserlage, von der gedacht nicht ondulierten abweicht. Die Ondulationshöhe ist insbesondere gegeben durch die den maximalen Abstand der ondulierte Faserlage, von der gedacht nicht ondulierten Faserlage.

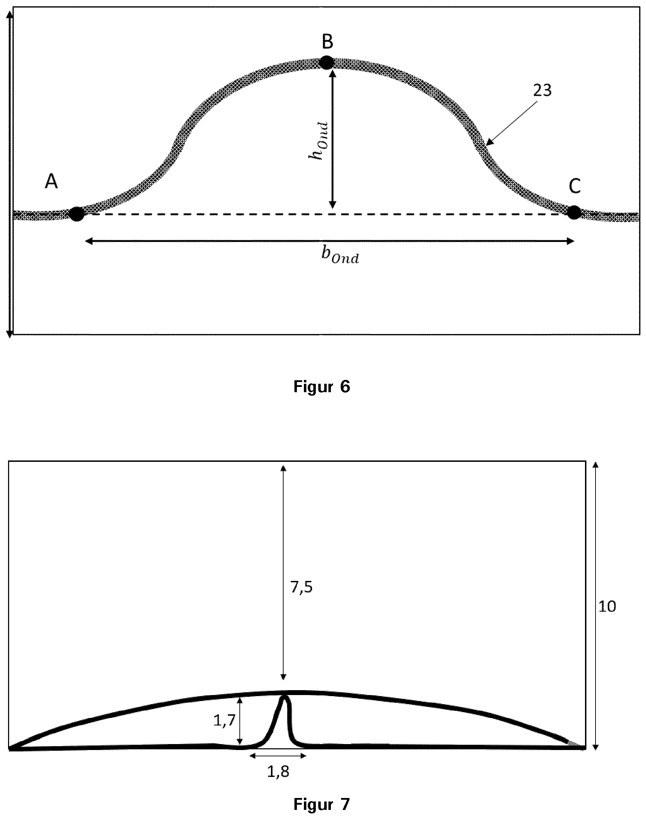

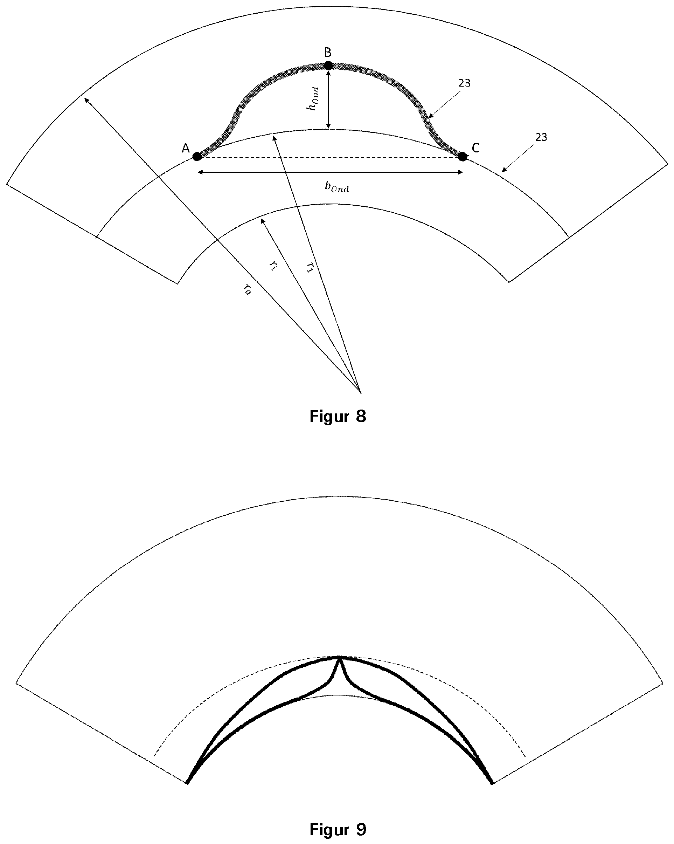

Die Ondulationsbreite und/oder -höhe werden insbesondere bestimmt wie im Zusammenhang mit den Figuren 6 und 8 beschrieben.

Mit Vorteil weist das Werkstück, Faserformhalbzeug und/oder das mindestens eine Faserhalbzeug mindestens drei, insbesondere mindestens vier, Faserlagen auf und/oder weisen die mindestens zwei Faserlagen zumindest drei, insbesondere vier, unterschiedliche Längserstreckungsrichtungen auf, wobei insbesondere mindestens zwei, insbesondere mindestens drei, Paare der Längserstreckungsrichtungen jeweils einen Winkel im Bereich von 30 bis 150°, insbesondere im Bereich von 40 bis 160 °, einschließen.

Vorteilhafterweise weist das Werkstück einen Fasergehalt im Bereich von 40 bis 75 Vol% bezogen auf das Werkstück, insbesondere bezogen auf das aus Faser und Bindemittel gebildete Werkstück oder den durch Faser und Bindemittel gebildeten Teil auf und/oder weist das Werkstück und/oder dieser Teil eine Dicke im Bereich von 1 bis 60 mm auf. Mit Vorteil ist die Vorrichtung eingerichtet, ein solches Werkstück herzustellen und/oder wird das Verfahren geführt, ein solches Werkstück herzustellen.

Insbesondere ist das Werkstück mittels des erfindungsgemäßen Verfahrens hergestellt und/oder weist es als vorteilhaft beschriebene Eigenschaften auf.

Die erfindungsgemäßen und vorteilhaften Merkmale, die bezüglich der Umformvorrichtung und/oder des Systems beschrieben sind, lassen sich auf die Umformvorrichtung bzw. das System , soweit für den Fachmann möglich, übertragen. Die offenbarten erfindungsgemäßen Merkmale der Umformvorrichtung sind somit auch auf das das System, die offenbarten erfindungsgemäßen Merkmale des Systems auch auf die Umformvorrichtung übertragbar.

Weitere Vorteile und Merkmale der Erfindung ergeben sich exemplarisch aus der nachstehenden Beschreibung eines exemplarischen Ausführungsbeispiels anhand der beigefügten rein schematischen Figuren. Dabei zeigen:

Fig. 1      eine skizzenhafte Darstellung eines erfindungsgemäßen Systems mit einer erfindungsgemäßen Umformvorrichtung unter Anwendung des nicht beanspruchten, offenbarten Verfahrens,

Fig. 2      eine perspektivische Darstellung der erfindungsgemäßen Umformvorrichtung sowie einen Profilschnitt durch selbige mit darin befindlichem Faserhalbzeug,

Fig. 3      einen Profilschnitt durch erfindungsgemäße Umformvorrichtungen mit drei verschiedenen vorteilhaften Ausführungen der Niederhalter,

Fig. 4      einen Profilschnitt durch eine erfindungsgemäße Umformvorrichtung mit einer schrägen Flanke in dem Formwerkzeug und deren Führungsfläche,

Fig. 5      eine Aufsicht und eine Seitenansicht einer erfindungsgemäßen Umformvorrichtung,

Fig. 6      zeigt eine Veranschaulichung der Quantifizierung der Ondulation,

Fig. 7 zeigt eine Veranschaulichung beispielhafter Ondulationen,

Fig. 8 zeigt eine Veranschaulichung der Quantifizierung der Ondulation in einem gebogenen Werkstückabschnitt,

Fig. 9 zeigt eine Veranschaulichung beispielhafter Ondulationen Ondulation in einem gebogenen Werkstückabschnitt, sowie

Fig. 10 eine Aufsicht einer erfindungsgemäßen Umformvorrichtung mit zwei parallelen Flächen, die jeweils eine Torsion aufweisen.

Die Figuren sind rein schematisch und beschränken sich in ihrer Darstellung auf für das Verständnis der Erfindung wichtigen Bauteile.

In den Figuren sind gleiche Elemente mit gleichen Bezugszeichen versehen.

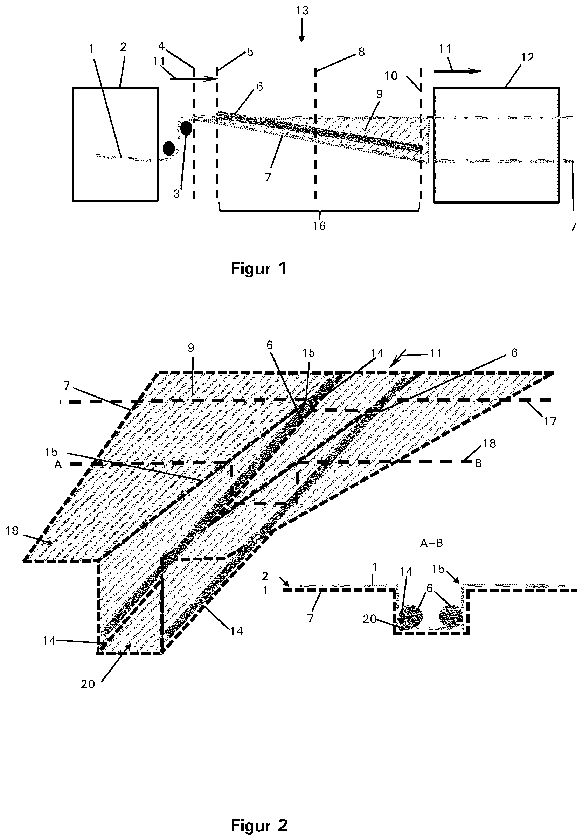

In der Figur 1 ist rein schematisch das erfindungsgemäße System mit einer erfindungsgemäßen Umformvorrichtung 13 unter Verwendung des Verfahrens dargestellt. Das System, die Umformvorrichtung 13 und das Verfahren werden in dieser und den darauffolgenden Figuren 1 bis 5 anhand eines Ausführungsbeispiels für eine Omega-Form eines Faserformhalbzeugs dargestellt.

Ein Faserhalbzeug 1 wird in dieser Abbildung von rechts aus von links nach rechts gezogen. Hierfür wird von einer Bereitstellungsvorrichtung 2 mithilfe einer Zugvorrichtung 12, welche am Ende der Bearbeitungsstrecke des Systems angeordnet ist, das Faserhalbzeug 1 gezogen. Das Faserhalbzeug 1 wird lediglich von der Zugvorrichtung 12 durch Zug am Faserformhalbzeug und/oder Werkstück durch die gesamte Bearbeitungsstrecke des Systems gezogen und befördert. Dabei stellt die Bereitstellungsvorrichtung 2 vorteilhafterweise ein endloses Faserhalbzeug 1 bereit oder alternativ (nicht dargestellt) werden mittels der Bereitstellungsvorrichtung 2 Abschnitte des Faserhalbzeugs 1 bereitgestellt, welche nach der Bereitstellungsvorrichtung 2 und vor der Umformvorrichtung 13 zu einem endlosen Faserhalbzeug verbunden werden, beispielsweise vernäht werden. In dem Ausführungsbeispiel, gezeigt in der Figur 1, wird das Faserhalbzeugs 1 mittels eines Umlenkmittels 3, beispielsweise einer Umlenkrolle, in die zwischen Bereitstellungsvorrichtung 2 und Zugvorrichtung 12 angeordnete Umformvorrichtung 13 mithilfe der Zugvorrichtung 12 gezogen.

Das Faserhalbzeugs 1 erreicht in einer Einlaufebene 4 mit einer Bewegungsrichtung in Richtung einer ersten Richtung 11, einer Vorschubrichtung des Faserhalbzeugs 1 in diesem Abschnitt des Systems, die Umformvorrichtung 13. Dabei wird das Faserhalbzeugs 1 über eine stirnseitige Anfangskante eines Formwerkzeuges 7 der Umformvorrichtung 12 gezogen. Das Formwerkzeug 7, welches einteilig oder aus mehreren Formwerkzeugteilen bestehend ausgebildet sein kann, bildet dabei eine Führungsfläche 9 für das Faserhalbzeugs 1, weswegen die Führungsfläche 9 durch die Ausdehnungen des Formwerkzeugs 7 oder aller Formwerkzeugteile definiert ist. Die Ausdehnung ist in der Figur 1 nicht gut zu erkennen. Für Details sei auf die nachfolgende Figur 2 verwiesen.

Die Umformvorrichtung 13 weist weiterhin zwei Niederhalter 6 auf, die sich über zumindest einen Teil der Umformvorrichtung 13 mit deren Längserstreckung erstrecken. Die Niederhalter 6 fixieren dabei vorteilhafterweise lokal, also lediglich an in Relation zur Führungsfläche 9 kleinen Bereichen des Faserhalbzeugs 1, das Faserhalbzeugs 1. Die Niederhalter 6 weisen jeweils zumindest teilweise auf deren Außenseite, insbesondere der dem Faserhalbzeug 1 zugewandten Außenseite, eine Kontaktoberfläche auf. Mit dieser Kontaktoberfläche kontaktieren die Niederhalter zwei Bereiche des Faserhalbzeugs 1 und schränken dieses dort lokal in der Bewegungsfreiheit ein. Die Niederhalter 6 können sich dabei jeweils über eine gleiche Gesamtlänge - beispielsweise in einem Winkel zur Horizontalen, wie in der Figur 1 dargestellt - wie das Formwerkzeug 7 bzw. die Führungsfläche 9 erstrecken. Möglich ist allerdings ebenso, dass sich die Niederhalter 6 über eine kürzere oder längere Strecke erstrecken als die Führungsfläche 9 bzw. das Formwerkzeug 7. Wie in der schematischen Abbildung der Figur 1 gezeigt, erstrecken sich die Niederhalter 6 im Wesentlichen lediglich über deren Längserstreckung. Die Führungsfläche 9 hingegen erstreckt sich sowohl in seiner Längserstreckung als auch entlang der Höhe des Systems, also sowohl Horizontal als auch in einem Winkel zur Horizontalen, und spannt sich somit über die Höhe im Laufe des Systems innerhalb der Umformvorrichtung 13 auf. Die Formwerkzeuge 7 sind dabei so angeordnet, dass diese bzw. die Führungsfläche 9 die gewünschte Form des Faserformhalbzeugs annähernd wiederspiegelt, hier in diesem Ausführungsbeispiel der Omega-Form.

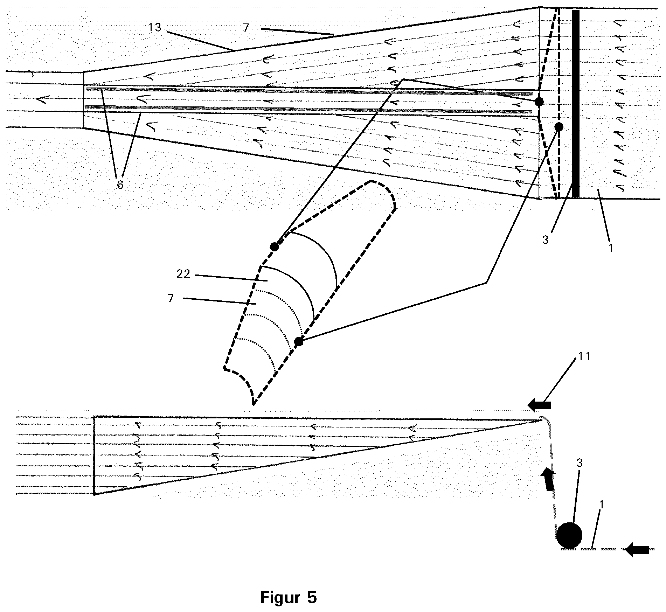

Aufgrund der Anordnung des Umlenkmittels 3, auf der gleichen Höhe wie bzw. etwas unterhalb der Anordnung der stirnseitigen und der Bereitstellungvorrichtung 2 nächstliegenden Kante wird das Faserhalbzeug 1 über diese Kante in die Umformvorrichtung 13 und den Umformabschnitt 16 gezogen. Eine vorteilhafte Gestaltung dieser Kante ist in der Figur 5 gezeigt.

In einer ersten Ebene 5, welche mit der Einlaufebene 4 zusammenfallen kann oder in Richtung der Zugvorrichtung 12 verschoben sein kann, sind die Niederhalter 6 und das Formwerkzeug 7 so angeordnet, dass die Kontaktoberfläche des ersten Niederhalters und die des zweiten Niederhalters jeweils zusammen mit der Führungsfläche 9 einen Spalt bilden, durch welchen das Faserhalbzeugs 1 gezogen wird. Die erste Ebene 5 erstreckt sich dabei senkrecht zur Zeichenebene der schematischen Abbildung der Figur 1. Möglich ist jedoch auch eine andere gedachte erste Ebene zu verwenden; Voraussetzung für die erste Ebene ist jedoch, dass in dieser Ebene nicht die erste Richtung liegt bzw. das Faserhalbzeug 1 nicht entlang oder in dieser Ebene gezogen wird, sondern quer zu dieser Richtung liegt. Wie in den darauffolgenden Abbildungen besser zu erkennen sein wird, weist die Führungsfläche 9 in der ersten Ebene 5 zwei konkave Schnittlinienabschnitte 14 auf. Diese Spalte und konkaven Schnittlinienabschnitte 14 sind ebenso in einer zweiten Ebene 10 vorhanden, welche parallel zur ersten Ebene 5 liegt, jedoch in Richtung der ersten Richtung 5 und in Richtung der Zugvorrichtung 12 verschoben. Es wird insbesondere eine zweite Ebene am Ende des Niederhalters 6 oder des Formwerkzeuges 7 bzw. Führungsfläche 9 betrachtet. Bei einer solchen zweiten Ebene 10 erstreckt sich somit von der ersten Ebene 5 bis zur zweiten Ebene 10 ein Umformabschnitt 16, in welchem das Faserhalbzeugs 1 in der Umformvorrichtung 13 mittels der Spalte bzw. der konkaven Schnittlinienabschnitte 14 bearbeitet, insbesondere geformt und umgelenkt, wird. Am Ende, insbesondere dem der Zugvorrichtung nachtliegenden und zugewandten Ende, der Spalten, welche durch die Führungsfläche 9 und den Niederhalter 6 gebildet werden, bzw. der Führungsfläche 9 oder der Niederhalter liegt dabei das Auslaufende, bei welchem das Faserhalbzeug 1 letztmalig durch die Umformvorrichtung 13, insbesondere die Führungsfläche 9 und/oder der Kontaktoberfläche, umgelenkt wird.

Angemerkt sei noch, dass in der Figur 1 gestrichelt der Verlauf eines mittleren Abschnitts der Breite des Faserhalbzeuges 1, die sich zumindest an der Einlaufebene 4 senkrecht zur Zeichenebene erstreckt, gezeigt ist. Andere Abschnitte erstrecken sich zumindest außerhalb der Einlaufebene 4, teilweise abweichend, beispielsweise in der Zeichenebene und senkrecht zur Zeichenebene, beispielsweise auf der strichpunktierten Linie, wie sich auch aus den nachfolgenden Figuren erkennen lassen wird.

In der Figur 2 ist eine perspektivische Darstellung einer erfindungsgemäßen Umformvorrichtung 13 (links) und ein Schnitt durch diese (rechts unten), wie in Fig. 1 verwendet gezeigt. Mittels der Umformvorrichtung 13 wird eine sogenannte Negativformung ermöglicht, wobei die Führungsfläche 9 das Negativ der gewünschten Form abbildet. Bei einer solchen Umformvorrichtung 13 wird das Faserhalbzeug 1, in dieser nur in der Schnittdarstellung dargestellt, wie in der Darstellung der Figur 1 gezeigt mittels der ersten Richtung 11 von oben in und durch die Umformvorrichtung 13 mittels der Zugvorrichtung 12 gezogen. Die Führungsfläche 9 ähnelt dabei einer Rampe "nach unten", also einer Rampe aus einer ersten Umformebene 21 in eine zweite Umformebene, welche unterhalb der ersten Umformebenebene angeordnet und zu dieser parallel ist. Das Faserhalbzeug 1 erstreckt sich beispielsweise am Anfang des Umformabschnitts 16 der Umformvorrichtung 13 noch über die gesamte Breite der Führungsfläche 9 - somit über eine große horizontale Breite. Im weiteren Verlauf der Umformvorrichtung 13 innerhalb des Umformabschnitts 16 wird ein erster Abschnitt, nämlich der mittlere Abschnitt, des Faserhalbzeugs 1 durch die Niederhalter 6 und deren Kontaktoberfläche sowie durch einen Teil der Führungsfläche 9, nämlich den Spalten und den konkaven Schnittlinienabschnitten 14, aus dieser ersten Umformebene 21 - nach unten - in die zweite Umformebene entlang einer zweiten Ziehebene 20 gezogen. Ein zweiter, nämlich der äußere, Abschnitt des Faserhalbzeug 1 wird dabei weiterhin in der ersten Umformebene 21 entlang einer ersten Ziehebene 19 gezogen. Die erste Umformebene entspricht somit der ersten Ziehebene 19, wobei die zweite Ziehebene 20 in einem Winkel zur ersten Ziehebene und somit ebenso zur ersten und zweiten Umformebene angeordnet ist, um somit die Rampe zu bilden. Ein weiterer, dritter Abschnitt, zwischen dem ersten, mittleren, und dem zweiten, äußeren, Abschnitt wird dabei senkrecht umgelenkt, nämlich aufgrund eines zweiten, nämlich eines konvexen Schnittlinienabschnitt 15 im Zusammenspiel mit dem konkaven Schnittlinienabschnitt 14. Dabei wird der konvexe Schnittlinienabschnitt 14 nicht durch einen oder an einem der Spalte bzw. der Niederhalter 6 gebildet, sondern ergibt sich aus der Form der Führungsfläche 9. Entsprechend der Form der Führungsfläche und insbesondere des konvexen Schnittlinienabschnitts 15 lässt sich dabei die in der Figur gezeigten senkrechte Abkantung oder eine andere, beispielsweise stumpfere Umlenkung realisieren. Die Länge des dritten Abschnitts vergrößert sich im Laufe der Umformung in dem Umformabschnitt 16, wobei die Länge des ersten Abschnitts in diesem Ausführungsbeispiel einer erfindungsgemäßen Umformvorrichtung 13 konstant während der Umformung bleibt. Es ist allerdings bezüglich einer gewünschten Form des Faserformhalbzeugs, welche beispielsweise eine schräge Flanke (dritter Abschnitt) aufweisen soll, ebenso möglich, dass zumindest die Längserstreckung eines der Niederhalter 6 in einem Winkel, also schräg und nicht parallel, relativ zu der des anderen Niederhalters 6 bzw. des Spaltes gebildet u.a. durch den anderen Niederhalter 6 erstreckt. Bei einer solchen Ausgestaltung wird es bevorzugt, wenn sich die Länge des ersten Abschnitts während der Umformung vergrößert.

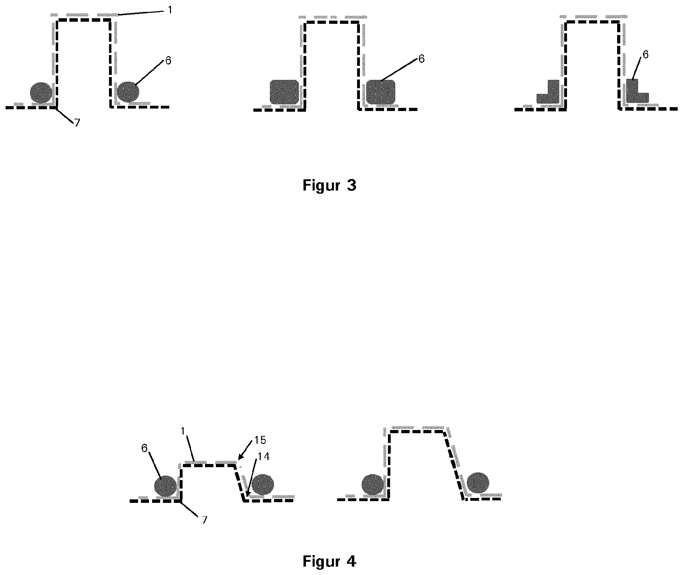

Eine solche Ausgestaltung der Umformvorrichtung 13 mit schräger Flanke ist beispielsweise in den Querschnittsdarstellungen der Abbildungen der Figur 4 dargestellt. Hier weist die rechte Flanke der durch das Formwerkzeug 7 definierten Führungsfläche 9 eine schräge Flanke auf. Ungeachtet der Anordnung der Niederhalter 6 zueinander verkleinert sich die Länge des zweiten, also hier des äußeren, Abschnitts, zumindest jedenfalls aufgrund der Verlängerung der Länge des dritten Abschnitts im Verlauf über die Länge der Umformvorrichtung (im Schnitt nur durch Vergleich der beiden Schnitte der Figur 4 zu erkennen). Eine Schnittlinie durch die Führungsfläche 9 in einer Ebene parallel zur ersten Ebene 5 ist durch die Schnittlinie 17 (in Figur 4 links) und Schnittlinie 18 (in Figur 4 rechts) (in der Längserstreckung angeordnet wie in Figur 2 auf der Umformvorrichtung der Figur 2 dargestellt) gezeigt, bei welchen im Vergleich die Verlängerung des dritten Abschnitts deutlich erkennbar ist.

Weiterhin ist in der Abbildung der Figur 2 ein Querschnitt entlang des Profils AB und der Schnittlinie 18 dargestellt, wobei in dieser Darstellung ebenso ein Faserhalbzeug 1 dargestellt ist. Zu erkennen ist, dass sich das Faserhalbzeug 1 mit dessen Breite nicht über die gesamte Breite der Führungsfläche 9 erstreckt, da sich der zweite Abschnitt des Faserhalbzeug 1 schon verkürzt hat. In diesem Ausführungsbeispiel ist demnach die Breite des Formwerkzeugs 7 und somit die Kontur der Führungsfläche 9 nicht vollständig an die Umformung und der daraus resultierenden Breitenänderung des Faserhalbzeugs 1 im Zuge der Umformung angepasst. Vorstellbar ist es jedoch, dass eine solche Anpassung passgenau stattfindet, um eine maximal platzsparende Umformvorrichtung bereitzustellen. Weiterhin sind die konkaven Schnittlinienabschnitte 14 der Führungsfläche 9 des Formwerkzeugs 7 und die Spalte, begrenzt jeweils durch die Kontaktoberfläche einen der Niederhalter 6 zusammen mit der Führungsfläche 9 des Formwerkzeugs 7 ersichtlich. Durch diese konkaven Schnittlinienabschnitte 14 und Spalte wird der erste, mittlere Abschnitt des Faserhalbzeugs nach unten in eine von der ersten Umformebene 21 abweichende und hierzu parallele Ebene gezogen. Aufgrund des konvexen Schnittlinienabschnitts 15 der Führungsfläche wird weiterhin der zweite Abschnitt des Faserhalbzeugs in der ersten Umformebene 21 entlang der ersten Ziehebene 19 gezogen, wodurch sich der dritte Abschnitt des Faserhalbzeugs ausbildet. Dieser dritte Abschnitt ist im vorliegenden Ausführungsbeispiels der Umformvorrichtung 13 senkrecht zum ersten und zweiten Abschnitt und die beiden dritten Abschnitte sind parallel zueinander angeordnet. Möglich sind allerdings auch andere Formgestaltungen der Führungsfläche, welche in diesem Beispiel einem Negativ eines, umgedrehten, Omega's entspricht.

In der Figur 3 sind exemplarisch drei verschiedene Ausgestaltungen der Form der Niederhalter 6 in einer Querschnittsansicht durch die Führungsfläche 9 parallel zur ersten Ebene 5 dargestellt. Dabei handelt es sich abweichend von den Darstellungen der Figuren 1 und 2 um eine Umformvorrichtung für ein Positivformen. Die Formwerkzeug 7 bilden somit mit ihrer Führungsfläche 9 das Positiv der gewünschten Form des Faserformhalbzeugs aus. Bei den Niederhalter 6 kann es sich somit einerseits um eine runde Form, beispielsweise einen Stab, handeln. Ebenso ist vorstellbar, dass ein quaderförmiger Niederhalter - wie in der mittleren Abbildung der Figur 3 dargestellt - eingesetzt wird. Hierbei ist zu beachten, dass in diesem Ausführungsbeispiel die Kanten des Quaders abgerundet sind, so dass das Faserhalbzeugs 1 durch die Niederhalter 6 und während des Durchführens des Faserhalbzeugs 1 durch den dadurch gebildeten Spalt nicht beschädigt wird. Auch eine Ausgestaltung in Form eines "L" für den Niederhalter 6 - wie in der rechten Abbildung der Figur 3 dargestellt - ist vorstellbar. Diese und auch weitere, andere Formen eines Niederhalters 6 sind sowohl für das Negativformen als auch das Positivformen möglich, solange mit diesem ein zumindest lokales Einschränken der Bewegung des Faserhalbzeugs 1 und/oder das Ausbilden eines Spaltes, insbesondere in einem konkaven Schnittlinienabschnitt 14 der Führungsfläche 9, realisierbar ist. Wie aus den Abbildungen der Figur 3 ersichtlich ist, kommt es darauf an, dass die Niederhalter 6 derart positioniert sind, dass diese in dem Bereich, in welchem der konkave Schnittlinienabschnitt 14 liegt, auf das Faserhalbzeug 1, insbesondere auf der anderen Seite, welche nicht durch die Führungsfläche 9 kontaktiert wird, einwirkt bzw. angreift. Ein Vorteil einer runden Ausgestaltung, also beispielsweise eines Stabs, ergibt sich dabei daraus, dass ein solcher um seine Längsachse drehbar gelagert angeordnet sein kann, wodurch zusätzliche aber steuerbare und gezielte Kraft quer zu der Vorschubrichtung, der ersten Richtung 11, auf das Faserhalbzeugs 1 aufgebracht werden kann und somit auch Kräfte quer dazu und quer zur Vorschubrichtung am Ort des Niederhalters in das Faserhalbzeug eingebracht werden können, die zur Vermeidung der Faltenbildung und zur Förderung einer sauberen Umformung beitragen. Dies ist beispielsweise durch Andrücken des Niederhalters auf das Faserhalbzeug möglich. Auch lassen sich die Kräfte und ihre Stärke durch die Andruckkraft und Richtung wählen und damit das Ergebnis der Umformung optimiere. Um allerdings ein einfaches und insbesondere beschädigungsfreies Durchführen und Umlenken des Faserhalbzeugs 1 durch die Umformvorrichtung 13 zu gewährleisten, ist im Besonderen vorgesehen, dass die Kontaktoberfläche der Niederhalter 6 mit einem Material versehen sind oder daraus gebildet sind, welches in Bezug zu dem gewählten Faserhalbzeugs 1 einen geringen Reibungskoeffizienten aufweist, wie beispielsweise POM- oder PTFE- (z. B. Teflon) Material.

In den Abbildungen der Figur 5 ist mit der oberen Abbildung eine Aufsicht auf ein Ausführungsbeispiel einer erfindungsgemäßen Umformvorrichtung 13 gezeigt. In dieser Abbildung wird ein Faserhalbzeugs 1 von rechts nach links gezogen, angedeutet mit den Pfeilen auf dem Faserhalbzeugs 1. In der unteren Ansicht der Abbildungen in der Figur 5 ist eine Seitenansicht der obigen Aufsicht dargestellt, in der Mitte eine perspektivische Ansicht des Einlaufelements 22 des Formwerkzeugs 7. Das Faserhalbzeugs 1 wird mittels des Umlenkmittels 3 auf das Einlaufelement 22 des Formwerkzeugs 7 gezogen. Diese Einlaufelements 22 des Formwerkzeugs 7 ist in der Detaildarstellung vergrößert dargestellt. Die untere Kante des Einlaufelements ist dabei geradlinig ausgestaltet. Die Anfangskante wölbt sich von der unteren Kante in Richtung der oberen Kante des Einlaufelements in unterschiedlichen Bereichen unterschiedlich stark (durch gestrichelte Linien hervorgehoben). So weist der mittlere Bereich (zwischen den beiden durchgezogenen Linien) des Einlaufelements 22 einen kreisabschnittförmigen Krümmungsabschnitt mit konstantem Radius über die Breite des Einlaufelements (zwischen den durchgezogenen Linien) auf, wobei der mittlere Bereich hin zu den äußeren Bereichen in einen Bereich mit einer stärkeren Krümmung übergeht. Auch ist die Länge der Oberfläche des Einlaufelements 22 nach außen hin jeweils abnehmend (auch an den durchgezogenen und gestrichelten Krümmungslinien zu erkennen)

Im weiteren Verlauf wird das Faserhalbzeugs 1 mittels des Spalts, der durch die Niederhalter 6 und die Führungsfläche 9, welche durch das Formwerkzeug 7 gebildet wird, definiert ist, umgelenkt und in die entsprechende Form, hier die Omega-Form, gelenkt. Aufgrund der Verlängerung des dritten Abschnitts des Faserhalbzeugs 1 - wie in der Abbildung der Figur 2 dargestellt und erörtert - verläuft ein Teil des Faserhalbzeugs 1 zunächst als der zweite Abschnitt des Faserhalbzeugs und somit zunächst in der ersten Umformungsebene, im weiteren Verlauf geht jedoch dieser Teil in den dritten Abschnitt über. Um hierdurch keine Falten oder Ondulationen entstehen zu lassen, wurde das Einlaufelement 22des Formwerkzeug 7 derart ausgebildet, wie in der Detaildarstellung dargestellt. Durch die Form des Einlaufelements 22 wird erreicht, dass das Faserhalbzeug 1 über die gesamte Breite die gleiche, also eine konstante, Streckenlänge entlang der gesamten Umformvorrichtung 13 und des Umformabschnitt 16 durchläuft. Diese Strecken sind durch die Linien mit Pfeilen veranschaulicht. Diese scheinen in der gezeigten Aufsicht unterschiedlich lang, sind aber bei dreidimensionaler Betrachtung gleich, über die Breite des Faserhalbzeugs konstant.

Figur 6 zeigt eine Veranschaulichung der Quantifizierung einer Ondulation einer Faserlage 23. Der als Rechteck gezeichnete Werkstückabschnitt, durch den ein Schnitt gezeigt ist, weist eine Vielzahl in Harz fixierter Faserlagen auf, von denen nur eine gezeigt ist. Die Werkstückdicke ist links durch einen Doppelfeil gekennzeichnet. Das Werkstück verläuft langestreckt von links nach rechts, auch die Faserlagen erstrecken sich abgesehen von Ondulationen waagerecht. Die gezeigte Faserlage weist eine Ondulation auf. Gezeigt sind des Weiteren:

$\tau_{BT}$ als Bauteildicke

$h_{Ond}$ als Ondulationshöhe

$b_{Ond}$ als die Ondulationsbreite zwischen den Punkten A und C. Die Punkt A und Punkt C sind durch die Punkte auf der gedacht nicht ondulierten Faserlage, hier waagerechter Verlauf, gekennzeichnet durch die gestrichelte Linie, gegeben, an denen der Verlauf der ondulierte Faserlage, von der gedacht nicht ondulierten abweicht.

Bevorzugt sind $\left|\dfrac{h_{Ond}}{t_{BT}}\right| \leq 0{,}25$ und/oder

$$\left|\dfrac{h_{Ond}}{b_{Ond}}\right| \leq 0{,}15.$$

Figur 7 veranschaulicht eine Ondulation die diese beiden Anforderungen erfüllt, und zwar die in der Figur langgestreckte und eine Ondulation, die die zweite Anforderung nicht erfüllt.

Figur 8 veranschaulicht die Quantifizierung aus Figur 6 an einem gebogenen Werkstückabschnitt. Die Ondulationshöhe $h_{Ond}$ ist beschrieben durch den Abstand des Kreisbogens (des Radius r1) des gedachten nicht ondulierten Verlaufs der ondulierten Einzellage zum Punkt B, der durch die maximal ausgelenkte Stelle der Ondulation gegeben ist, dessen senkrechter Abstand normiert am größten zur Kreisbogenlinie der gedacht nicht Ondulierten Faserlage ist.

$b_{Ond}$ wird durch die Kreissehne zwischen den Punkten A und C gebildet. Die Punkt A und Punkt C sind durch die Punkte auf der gedacht nicht ondulierten Faserlage (dünner Kreislinienabschnitt) gegeben, an denen der Verlauf der ondulierte Faserlage, die im ondulierten Bereich dicker dargestellt ist, von der gedacht nicht ondulierten abweicht. Die oben genannten bevorzugten Grenzen lassen sich dann auch wie folgt ausdrücken:

$$\left|\dfrac{h_{Ond}}{r_a - r_i}\right| \leq 0{,}25 \quad \text{und/oder} \quad \left|\dfrac{h_{Ond}}{b_{Ond}}\right| \leq 0{,}15$$

Figur 9 veranschaulicht eine Ondulation die diese beiden Anforderungen erfüllt, und zwar die in der Figur langgestreckte und eine Ondulation, die die zweite Anforderung nicht erfüllt. Die Grenze der ersten Anforderung ist durch eine gestrichelte Linie veranschaulicht.

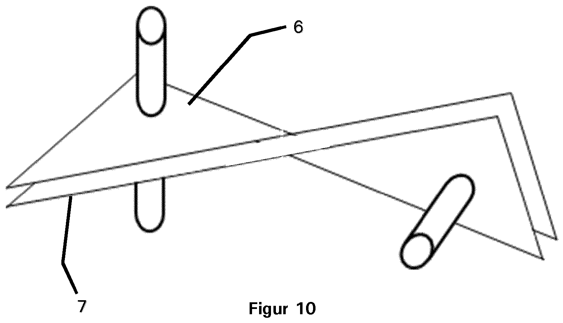

Fig. 10 zeigt eine Ansicht einer Umformvorrichtung mit einem Niederhalter 6, der eine Niederhalterführungsfläche aufweist, die parallel zu der Führungsfläche des Formwerkzeuges 7 verläuft. Die Flächen weisen jeweils eine Verschraubung auf und bilden zwischen sich einen Spalt aus. Zur Befestigung sind Stabförmige Halter an den Platten, die Niederhalterführungsfläche und Führungsfläche ausbilden, angeordnet.

Bezugszeichenliste

1    Faserhalbzeug
2    Bereitstellungsvorrichtung
3    Umlenkmittel
4    Einlaufebene
5    erste Ebene
6    Niederhalter
7    Formwerkzeug

8  dritte Ebene
9  Führungsfläche
10  zweite Ebene
11  erste Richtung
12  Zugvorrichtung
13  Umformvorrichtung
14  konkaver Schnittlinienabschnitt
15  konvexer Schnittlinienabschnitt
16  Umformabschnitt
17  Schnittlinie
18  Schnittlinie
19  ersten Ziehebene
20  zweite Ziehebene
21  erste Umformebene
22  Einlaufelement
23  Faserlage

**Patentansprüche**

1. Umformvorrichtung (13) zur kontinuierlichen Umformung, die mindestens einen, insbesondere mindestens zwei, Niederhalter (6) und mindestens ein Formwerkzeug (7) aufweist, wobei der mindestens eine Niederhalter eine Kontaktoberfläche aufweist, der Niederhalter sich zumindest über einen sich entlang mindestens einer ersten Richtung erstreckenden Umformabschnitt (16) des Formwerkzeugs erstreckt und das mindestens eine Formwerkzeug aufweisend ein Einlaufende und ein dem Einlaufende gegenüberliegendes Auslaufende mindestens eine Führungsfläche (9) definiert,

    a. wobei sich der Umformabschnitt von einer ersten Ebene (5) quer zur ersten Richtung aus zum Auslaufende hin erstreckt, wobei die erste Ebene die zum Einlaufende nächstliegende ist, in der die mindestens eine Führungsfläche in der ersten Ebene mindestens einen ersten konkaven Schnittlinienabschnitt (14) aufweist, und
    b. wobei die Führungsfläche in der ersten Ebene auch einen konvexen Schnittlinienabschnitt (15) aufweist und
    c. wobei die mindestens eine Führungsfläche in einer zur ersten Ebene echt parallelen zweiten Ebene (10) mindestens einen zweiten konkaven Schnittlinienabschnitt aufweist,
    d. wobei eine erste Länge zwischen Kontaktoberfläche und Führungsfläche in der ersten Ebene gemessen entlang einer ersten Flächennormalen der Führungsfläche auf dem konkaven Schnittlinienabschnitt in der ersten Ebene im Bereich des 0,8 bis 1,2-fachen einer zweiten Länge zwischen Kontaktoberfläche und Führungsfläche in der ersten Ebene gemessen entlang einer zweiten Flächennormale der Führungsfläche auf dem konkaven Schnittlinienabschnitt in der ersten Ebene liegt, wobei die erste Flächennormale und die zweite Flächennormale in der ersten Ebene in einem Winkel zwischen 30° und 45° zueinander stehen und
    e. wobei eine dritte Länge zwischen Kontaktoberfläche und Führungsfläche in der zweiten Ebene gemessen entlang einer dritten Flächennormale der Führungsfläche auf dem konkaven Schnittlinienabschnitt in der zweiten Ebene im Bereich des 0,8 bis 1,2-fachen einer vierten Länge zwischen Kontaktoberfläche und Führungsfläche in der zweiten Ebene gemessen entlang einer vierten Flächennormale der Führungsfläche auf dem konkaven Schnittlinienabschnitt in der zweiten Ebene liegt, wobei die dritte Flächennormale und die vierte Flächennormale in der zweiten Ebene in einem Winkel im Bereich zwischen 30° und 45° zueinander stehen und
    f. wobei die erste Länge im Bereich des 0,8 bis 1,2-fachen der dritten Länge liegt und
    g. wobei sich die Schnittlinie der mindestens einen Führungsfläche mit der ersten Ebene von der Schnittlinie der Führungsfläche mit der zweiten Ebene unterscheidet,
    h. wobei die der mindestens eine Niederhalter und/oder seine Kontaktfläche und/oder die mindestens eine Führungsfläche zumindest teilweise als Rampe ausgebildet ist.

2. Umformvorrichtung nach Anspruch 1, **dadurch gekennzeichnet, dass** der Abstand zwischen der ersten und der zweiten Ebene, gemessen entlang der ersten Richtung größer ist als die erste und die dritte Länge, insbesondere um mindestes das 10-fache größer ist als die erste und die dritte Länge.

3. Umformvorrichtung nach einem der voranstehenden Ansprüche **dadurch gekennzeichnet, dass** die Kontaktoberfläche des Niederhalters in einer Ebene quer zur ersten Richtung, insbesondere in der ersten und/oder zweiten Ebene, einen ersten konvexen Niederhalterschnittlinienabschnitt aufweist.

4. Umformvorrichtung nach einem der voranstehenden Ansprüche **dadurch gekennzeichnet, dass** in einer zwischen erster und zweiter Ebene angeordneten, zur ersten und/oder zweiten Ebene parallelen dritten Ebene die Führungsfläche sowohl einen konkaven als auch einen konvexen Schnittlinienabschnitt aufweist, wobei der Abstand der dritten Ebene zur ersten Ebene und/oder zur zweiten Ebene mindestens 20% der Erstreckung des Umformabschnitts und/oder mindestens 0,2 m beträgt.

5. Umformvorrichtung nach dem voranstehenden Anspruch **dadurch gekennzeichnet, dass** sich die Schnittlinie der mindestens einen Führungsfläche in der ersten Ebene von der Schnittlinie der Führungsfläche in der dritten Ebene unterscheidet, insbesondere sich ein erster Schnittlinienabschnittsabstand zwischen konkaven und konvexen Schnittlinienabschnitt in der ersten Ebene von einem zweiten Schnittlinienabschnittsabstand zwischen konkaven und konvexen Schnittlinienabschnitt in der dritten Ebene unterscheidet, insbesondere der erste Schnittlinienabschnittsabstand kleiner ist als der zweite Schnittlinienabschnittsabstand, insbesondere um mindestens 10% des zweiten Schnittlinienabschnittsabstandes kleiner ist.

6. Umformvorrichtung nach einem der voranstehenden Ansprüche, wobei die erste Richtung der Vorschubrichtung zumindest an der ersten und/oder zweiten und/oder dritten Ebene entspricht und/oder parallel zu einer ersten Umformebene liegt, in welcher der Einlaufabschnitt und/oder der Auslaufabschnitt angeordnet ist, und/oder einem Vektor vom Schwerpunkt des Einlaufendes zum Schwerpunkt des Auslaufendes entspricht und/oder wobei der Niederhalter eine Längserstreckung aufweist, welche nicht parallel zur ersten Richtung und/oder zu einer Vorschubrichtung und/oder zu einer/der ersten Umformebene und/oder zu einer Tangentialfläche des Formwerkzeugs am Einlaufende parallel zur ersten Richtung und/oder einer/der Vorschubrichtung liegt, insbesondere nicht parallel in der Ebene, welche eine Ebene am Einlaufende am besten approximiert und/oder wobei der mindestens eine Niederhalter eine erste Längserstreckung und die Führungsfläche eine, insbesondere zur ersten Längserstreckung parallele, zweite Längserstreckung aufweist, wobei das Verhältnis von erster Längserstreckung zur zweiten Längserstreckung im Bereich von 0,8 bis 1,2, insbesondere von 0,9 bis 1,1, liegt, insbesondere die Länge der ersten Längserstreckung der zweiten Längserstreckung entspricht.

7. Umformvorrichtung nach einem der voranstehenden Ansprüche,

   wobei die Umformvorrichtung mindestens zwei Niederhalter aufweist, wobei ein erster Niederhalterabstand zwischen zwei Niederhaltern in der ersten Ebene kleiner ist als ein zweiter Niederhalterabstand der zwei Niederhalter voneinander in der zweiten und/oder dritten Ebene, oder
   dass die Umformvorrichtung mindestens einen Niederhalter aufweist, wobei der Niederhalter in der ersten Ebene und quer zur ersten Richtung eine erste Erstreckung aufweist, die kleiner ist als eine zweite Erstreckung des Niederhalters in der zweiten und/oder dritten Ebene quer zur ersten Richtung und/oder wobei der Niederhalter um eine erste zu seiner Längserstreckung parallele Achse drehbar gelagert ist und/oder dass die Kontaktoberfläche des Niederhalters aus Teflon besteht oder mit Teflon beschichtet ist.

8. Umformvorrichtung nach einem der voranstehenden Ansprüche **dadurch gekennzeichnet, dass** eine Längserstreckung der mindestens einen Kontaktoberfläche parallel zur ersten Richtung mindestens 60% der zur ersten Richtung parallelen Erstreckung des Umformabschnitts aufweist, wobei insbesondere die Kontaktoberfläche über mindestens 50% der Längserstreckung durchgängig ist.

9. Umformvorrichtung nach einem der voranstehenden Ansprüche, wobei das mindestens eine Formwerkzeug und/oder die mindestens eine Führungsfläche an der ersten Ebene eine erste Quererstreckung in der ersten Ebene, insbesondere parallel zur Umformebene, und der mindestens eine Niederhalter, insbesondere alle Niederhalter, und/oder die mindestens eine Kontaktoberfläche, insbesondere alle Kontaktoberflächen, in der ersten Ebene, insbesondere parallel zur Umformebene, eine zweite Quererstreckung aufweist, wobei die erste Quererstreckung länger ist als die zweite Quererstreckung, insbesondere um mindestens 50% der zweiten Quererstreckung und/oder wobei mindestens eine Führungsfläche in einer zur ersten Ebene parallelen Einlaufebene quer, insbesondere senkrecht, zur Einlaufebene und parallel zur ersten Richtung eine Biegung von maximal 1 rad, insbesondere maximal 0,5 rad, insbesondere maximal 0,1 rad, insbesondere maximal 0,05 rad, aufweist, wobei die erste Ebene zwischen der Einlaufebene und der zweiten und/oder dritten Ebene liegt.

10. System zur kontinuierlichen Herstellung von, insbesondere endlosen, Halbwerkzeugen aufweisend

    eine Bereitstellungsvorrichtung zur Bereitstellung von Faserhalbzeug,
    eine Zugvorrichtung, mittels welcher Faserhalbzeug von der Bereitstellungsvorrichtung entnommen, insbesondere gezogen, wird, und
    einen zwischen Bereitstellungsvorrichtung und Zugvorrichtung angeordneten Umformvorrichtung nach einem der vorangehenden Ansprüche und einen zwischen Umformvorrichtung und Bereitstellungsvorrichtung angeordneten Einführungsabschnitt aufweist.

11. System nach dem voranstehenden Anspruch, wobei der Einführungsabschnitt mindestens ein erstes Umlenkmittel, insbesondere Umlenkrolle und/oder Umlenkblende, zum Führen des entnommenen Faserhalbzeugs aufweist, wobei ein, insbesondere alle, kürzester Verbindungsvektor vom Umlenkmittel zum Einlaufende zur ersten Richtung einen Winkel kleiner oder gleich 90° einschließen und/oder wobei das Einlaufende, insbesondere in einer Einlaufebene senkrecht zur ersten Ebene, konvex und/oder das Umlenkmittel, insbesondere in einer eine Umlenkebene senkrecht zur ersten Ebene und/oder parallel zur Einlaufebene, konvex ausgebildet ist und/der wobei mindestens eine Spritzvorrichtung oder Tränkvorrichtung zur Aufbringung eines Bindemittels vor und/oder nach der Umformvorrichtung und/oder dem Umformabschnitt angeordnet ist und/oder eine Aushärtevorrichtung nach der Spritzvorrichtung oder Tränkvorrichtung oder an der Umformvorrichtung und/oder dem Umformabschnitt angeordnet ist.

## Claims

1. Shaping device (13) for continuous shaping, which has at least one, in particular at least two, hold-down devices (6) and at least one shaping tool (7), wherein said at least one hold-down device has a contact surface, the hold-down device extends at least over a shaping section (16) of the shaping tool extending along at least a first direction, and said at least one shaping tool, having an inlet end and an outlet end opposite the inlet end, defines at least one guide surface (9),

   a. wherein the shaping section extends from a first plane (5) transverse to the first direction towards the outlet end, wherein the first plane is the one closest to the inlet end, wherein said at least one guide surface in the first plane has at least one first concave intersection section (14), and
   b. wherein the guide surface in the first plane also has a convex intersection section (15), and
   c. wherein said at least one guide surface in a second plane (10) truly parallel to the first plane has at least one second concave intersection section,
   d. wherein a first length between the contact surface and the guide surface in the first plane, measured along a first surface normal of the guide surface on the concave intersection line section in the first plane, lies in the range of 0.8 to 1.2 times a second length between the contact surface and the guide surface in the first plane measured along a second surface normal of the guide surface on the concave intersection section in the first plane, wherein the first surface normal and the second surface normal in the first plane are at an angle between 30° and 45° to each other, and
   e. wherein a third length between the contact surface and the guide surface in the second plane measured along a third surface normal of the guide surface on the concave intersection section in the second plane is in the range of 0.8 to 1.2 times a fourth length between the contact surface and the guide surface in the second plane measured along a fourth surface normal of the guide surface on the concave intersection section in the second plane, wherein the third surface normal and the fourth surface normal in the second plane are at an angle between 30° and 45° to each other and
   f. wherein the first length is in the range of 0.8 to 1.2 times the third length, and
   g. wherein the intersection line of said at least one guide surface with the first plane differs from the intersection line of the guide surface with the second plane,
   h. wherein said at least one hold-down device and/or its contact surface and/or said at least one guide surface is at least partially designed as a ramp.

2. Shaping device according to claim 1, **characterised in that** the distance between the first and second planes, measured along the first direction, is greater than the first and third lengths, in particular at least 10 times greater than the first and third lengths.

3. Shaping device according to one of the preceding claims, **characterised in that** the contact surface of the hold-down device has a first convex hold-down device intersection section in a plane transverse to the first direction, in particular in the first and/or second plane.

4. Shaping device according to one of the preceding claims, **characterised in that**, in a third plane arranged between the first and second planes and parallel to the first and/or second planes, the guide surface has both a concave and a convex intersection section, wherein the distance between the third plane and the first plane and/or the second plane is at least 20% of the extension of the shaping section and/or at least 0.2 m.

5. Shaping device according to the preceding claim, **characterised in that** the intersection line of said at least one guide surface in the first plane differs from the intersection line of the guide surface in the third plane, in particular, a first intersection line section distance between concave and convex intersection line sections in the first plane differs from a second intersection line section distance between concave and convex intersection line sections in the third plane, in particular, the first intersection line section distance is smaller than the second intersection line section distance, in particular, it is smaller by at least 10% of the second intersection line section distance.

**6.** Shaping device according to one of the preceding claims, wherein the first direction of the feed direction corresponds at least to the first and/or second and/or third plane and/or is parallel to a first shaping plane in which the inlet section and/or the outlet section is arranged, and/or corresponds to a vector from the centre of gravity of the inlet end to the centre of gravity of the outlet end and/or wherein the hold-down device has a longitudinal extension which is not parallel to the first direction and/or to a feed direction and/or to a/the first shaping plane and/or to a tangential surface of the shaping tool at the inlet end parallel to the first direction and/or a/the feed direction, in particular not parallel in the plane which best approximates a plane at the inlet end and/or wherein said at least one hold-down device has a first longitudinal extension and the guide surface has a second longitudinal extension, in particular parallel to the first longitudinal extension, wherein the ratio of the first longitudinal extension to the second longitudinal extension is in the range from 0.8 to 1.2, in particular from 0.9 to 1.1, in particular the length of the first longitudinal extension corresponds to the second longitudinal extension.

**7.** Shaping device according to one of the preceding claims, wherein the shaping device has at least two hold-down devices, wherein a first hold-down device distance between two hold-down devices in the first plane is smaller than a second hold-down device distance between the two hold-down devices in the second and/or third plane, or
the shaping device has at least one hold-down device, wherein the hold-down device has a first extension in the first plane and transversely to the first direction, which is smaller than a second extension of the hold-down device in the second and/or third plane transversely to the first direction and/or wherein the hold-down device is rotatably mounted about a first axis parallel to its longitudinal extension and/or that the contact surface of the hold-down device consists of Teflon or is coated with Teflon.

**8.** Shaping device according to one of the preceding claims, **characterised in that** a longitudinal extension of said at least one contact surface parallel to the first direction has at least 60% of the extension of the shaping section parallel to the first direction, wherein in particular the contact surface is continuous over at least 50% of the longitudinal extension.

**9.** Shaping device according to one of the preceding claims, wherein said at least one shaping tool and/or said at least one guide surface on the first plane has a first transverse extension in the first plane, in particular parallel to the shaping plane, and said at least one hold-down device, in particular all hold-down devices, and/or said at least one contact surface, in particular all contact surfaces, in the first plane, in particular parallel to the shaping plane, a second transverse extension, wherein the first transverse extension is longer than the second transverse extension, in particular by at least 50% of the second transverse extension, and/or wherein at least one guide surface in an inlet plane parallel to the first plane has a transverse, in particular perpendicular, to the inlet plane and parallel to the first direction, with a bend of at most 1 rad, in particular at most 0.5 rad, in particular at most 0.1 rad, in particular at most 0.05 rad, wherein the first plane lies between the inlet plane and the second and/or third plane.

**10.** System for the continuous production of, in particular, endless semi-finished tools, comprising a supply device for supplying semi-finished fibre material, a pulling device by means of which semi-finished fibre material is removed, in particular pulled, from the supply device, and
a shaping device arranged between the supply device and the pulling device according to one of the preceding claims, and an insertion section arranged between the shaping device and the supply device.

**11.** System according to the preceding claim, wherein the insertion section has at least one first deflection means, in particular a deflection roller and/or deflection plate, for guiding the extracted semi-finished fibre product, wherein one, in particular all, shortest connecting vector from the deflection means to the inlet end forms an angle smaller than or equal to 90° with the first direction and/or wherein the inlet end, in particular in an inlet plane perpendicular to the first plane, is convex and/or the deflection means, in particular in a deflection plane perpendicular to the first plane and/or parallel to the inlet plane, and/or wherein at least one spraying device or impregnation device for applying a binding agent is arranged before and/or after the shaping device and/or the shaping section and/or a curing device is arranged after the spraying device or impregnation device or on the shaping device and/or the shaping section.

## Revendications

**1.** Dispositif de façonnage (13) pour le façonnage en continu, qui comporte au moins un, en particulier au moins deux dispositifs de maintien (6) et au moins un outil de façonnage (7), dans lequel ledit au moins un dispositif de maintien présente une surface de contact, le dispositif de maintien s'étend au moins sur une section de façonnage (16) de l'outil de façonnage s'étendant le long d'au moins une première direction, et ledit au moins un outil de façonnage, présentant une extrémité d'entrée et une extrémité de sortie opposée à l'extrémité d'entrée, définit au moins une surface de guidage (9),

  a. dans lequel la section de façonnage s'étend depuis un premier plan (5) transversal à la première direction vers l'extrémité de sortie, dans lequel le premier plan est celui le plus proche de l'extrémité d'entrée, dans lequel ladite au moins une surface de guidage dans le premier plan comporte au moins une première section d'intersection concave (14), et

  b. dans lequel la surface de guidage dans le premier plan comporte également une section d'intersection convexe (15), et

  c. dans lequel ladite au moins une surface de guidage dans un deuxième plan (10) véritablement parallèle au premier plan comporte au moins une deuxième section d'intersection concave,

  d. dans lequel une première longueur entre la surface de contact et la surface de guidage dans le premier plan, mesurée le long d'une première normale à la surface de guidage sur la section de ligne d'intersection concave dans le premier plan, se situe dans la plage de 0,8 à 1,2 fois une deuxième longueur entre la surface de contact et la surface de guidage dans le premier plan, mesurée le long d'une deuxième normale à la surface de guidage sur la section d'intersection concave dans le premier plan, dans lequel la première normale à la surface et la deuxième normale à la surface dans le premier plan forment un angle compris entre 30° et 45° l'une par rapport à l'autre, et

  e. dans lequel une troisième longueur entre la surface de contact et la surface de guidage dans le deuxième plan, mesurée le long d'une troisième normale à la surface de guidage sur la section d'intersection concave dans le deuxième plan, est comprise entre 0,8 et 1,2 fois une quatrième longueur entre la surface de contact et la surface de guidage dans le deuxième plan, mesurée le long d'une quatrième normale à la surface de guidage sur la section d'intersection concave dans le deuxième plan, dans lequel la troisième normale à la surface et la quatrième normale à la surface dans le deuxième plan forment un angle compris entre 30° et 45° l'une par rapport à l'autre, et

  f. dans lequel la première longueur est comprise entre 0,8 et 1,2 fois la troisième longueur, et

  g. dans lequel la ligne d'intersection de ladite au moins une surface de guidage avec le premier plan diffère de la ligne d'intersection de la surface de guidage avec le deuxième plan,

  h. dans lequel ledit au moins un dispositif de maintien et/ou sa surface de contact et/ou ladite au moins une surface de guidage est au moins partiellement conçue comme une rampe.

**2.** Dispositif de façonnage selon la revendication 1, **caractérisé en ce que** la distance entre les premier et deuxième plans, mesurée dans la première direction, est supérieure aux première et troisième longueurs, en particulier au moins 10 fois supérieure aux première et troisième longueurs.

**3.** Dispositif de façonnage selon l'une des revendications précédentes, **caractérisé en ce que** la surface de contact du dispositif de maintien présente une première section d'intersection convexe du dispositif de maintien dans un plan transversal à la première direction, en particulier dans le premier et/ou le deuxième plan.

**4.** Dispositif de façonnage selon l'une des revendications précédentes, **caractérisé en ce que**, dans un troisième plan disposé entre les premier et deuxième plans et parallèle aux premier et/ou deuxième plans, la surface de guidage présente à la fois une section d'intersection concave et une section d'intersection convexe, la distance entre le troisième plan et le premier plan et/ou le deuxième plan étant d'au moins 20 % de l'extension de la section de façonnage et/ou d'au moins 0,2 m.

**5.** Dispositif de mise en forme selon la revendication précédente, **caractérisé en ce que** la ligne d'intersection de ladite au moins une surface de guidage dans le premier plan diffère de la ligne d'intersection de la surface de guidage dans le troisième plan, en particulier, une première distance entre les sections de ligne d'intersection concave et convexe dans le premier plan diffère d'une deuxième distance entre les sections de ligne d'intersection concave et convexe dans le troisième plan, en particulier, la première distance entre les sections de ligne d'intersection est inférieure à la deuxième distance entre les sections de ligne d'intersection, en particulier, elle est inférieure d'au moins 10 % à la deuxième distance entre les sections de ligne d'intersection.

**6.** Dispositif de façonnage selon l'une des revendications précédentes, dans lequel la première direction de la direction d'alimentation correspond au moins au premier et/ou au deuxième et/ou au troisième plan et/ou est parallèle à un premier plan de façonnage dans lequel la section d'entrée et/ou la section de sortie est disposée, et/ou correspond à un vecteur allant du centre de gravité de l'extrémité d'entrée au centre de gravité d' de l'extrémité de sortie et/ou dans lequel le dispositif de maintien a une extension longitudinale qui n'est pas parallèle à la première direction et/ou à une direction d'alimentation et/ou à un/au premier plan de façonnage et/ou à une surface tangentielle de l'outil de façonnage à l'extrémité d'entrée parallèle à la première direction et/ou à la/aux direction(s) d'alimentation, en particulier non parallèle dans le plan qui se rapproche le plus d'un plan à l'extrémité d'entrée et/ou dans lequel ledit au moins un dispositif de maintien présente une première extension longitudinale et la surface de guidage présente une deuxième extension longitudinale, en particulier parallèle à la première extension longitudinale, dans lequel le rapport entre la première extension longitudinale et la deuxième extension longitudinale est compris entre 0,8 et 1,2, en particulier entre 0,9 et 1,1, en particulier la longueur de la première extension longitudinale correspond à la deuxième extension longitudinale.

7. Dispositif de façonnage selon l'une des revendications précédentes, dans lequel le dispositif de façonnage comporte au moins deux dispositifs de maintien, dans lequel une première distance entre deux dispositifs de maintien dans le premier plan est inférieure à une deuxième distance entre les deux dispositifs de maintien dans le deuxième et/ou le troisième plan, ou bien
le dispositif de façonnage comporte au moins un dispositif de maintien, dans lequel le dispositif de maintien présente une première extension dans le premier plan et transversalement à la première direction, qui est plus petite qu'une deuxième extension du dispositif de maintien dans le deuxième et/ou troisième plan transversalement à la première direction et/ou dans lequel le dispositif de maintien est monté de manière rotative autour d'un premier axe parallèle à son extension longitudinale et/ou que la surface de contact du dispositif de maintien est constituée de téflon ou est recouverte de téflon.

8. Dispositif de mise en forme selon l'une des revendications précédentes, **caractérisé en ce qu'**une extension longitudinale de ladite au moins une surface de contact parallèle à la première direction a au moins 60 % de l'extension de la section de mise en forme parallèle à la première direction, dans lequel en particulier la surface de contact est continue sur au moins 50 % de l'extension longitudinale.

9. Dispositif de façonnage selon l'une des revendications précédentes, dans lequel ledit au moins un outil de façonnage et/ou ladite au moins une surface de guidage sur le premier plan présente une première extension transversale dans le premier plan, en particulier parallèle au plan de façonnage, et ledit au moins un dispositif de maintien, en particulier tous les dispositifs de maintien, et/ou ladite au moins une surface de contact, en particulier toutes les surfaces de contact, dans le premier plan, en particulier parallèlement au plan de façonnage, une deuxième extension transversale, la première extension transversale étant plus longue que la deuxième extension transversale, en particulier d'au moins 50 % de la deuxième extension transversale, et/ou dans lequel au moins une surface de guidage dans un plan d'entrée parallèle au premier plan présente une extension transversale, en particulier perpendiculaire au plan d'entrée et parallèle à la première direction, avec une courbure d'au plus 1 rad, en particulier d'au plus 0,5 rad, en particulier d'au plus 0,1 rad, en particulier d'au plus 0,05 rad, le premier plan se trouvant entre le plan d'entrée et le deuxième et/ou le troisième plan.

10. Système pour la production en continu, en particulier, d'outils semi-finis sans fin, comprenant un dispositif d'alimentation pour alimenter en matériau fibreux semi-fini, un dispositif de traction au moyen duquel le matériau fibreux semi-fini est retiré, en particulier tiré, du dispositif d'alimentation, et un dispositif de façonnage disposé entre le dispositif d'alimentation et le dispositif de traction selon l'une des revendications précédentes, et une section d'insertion disposée entre le dispositif de façonnage et le dispositif d'alimentation.

11. Système selon la revendication précédente, dans lequel la section d'insertion comporte au moins un premier moyen de déviation, en particulier un rouleau de déviation et/ou une plaque de déviation, pour guider le produit semi-fini en fibres extrait, dans lequel un, en particulier tous les vecteur de liaison le plus court entre le moyen de déviation et l'extrémité d'entrée forme un angle inférieur ou égal à 90° avec la première direction et/ou dans lequel l'extrémité d'entrée, en particulier dans un plan d'entrée perpendiculaire au premier plan, est convexe et/ou le moyen de déviation, en particulier dans un plan de déviation perpendiculaire au premier plan et/ou parallèle au plan d'entrée, et/ou dans lequel au moins un dispositif de pulvérisation ou un dispositif d'imprégnation pour appliquer un liant est disposé avant et/ou après le dispositif de façonnage et/ou la section de façonnage et/ou un dispositif de durcissement est disposé après le dispositif de pulvérisation ou le dispositif d'imprégnation ou sur le dispositif de façonnage et/ou la section de façonnage.

**Figur 1**

**Figur 2**

**Figur 3**

**Figur 4**

**Figur 5**

**Figur 6**

**Figur 7**

**Figur 8**

**Figur 9**

**Figur 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120328846 A1
- EP 2265436 B1
- EP 2722145 A1
- EP 2985137 A1
- DE 102014011943 A1
- DE 102014019220 A1
- US 20050269016 A1
- JP 2011135886 A
- JP 59179228 A